(19)

**Europäisches Patentamt**

**European Patent Office**

**Office européen des brevets**

(11) **EP 4 642 042 A2**

(12) **EUROPEAN PATENT APPLICATION**

(43) Date of publication:
29.10.2025 Bulletin 2025/44

(21) Application number: 25167295.2

(22) Date of filing: 31.03.2025

(51) International Patent Classification (IPC):
**H04N 23/611** (2023.01) **G06V 40/12** (2022.01)
**H04N 101/00** (2006.01)

(52) Cooperative Patent Classification (CPC):
**H04N 23/611; G06V 40/12; H04N 2101/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 01.04.2024 JP 2024059141
26.12.2024 JP 2024231022

(71) Applicant: **CANON KABUSHIKI KAISHA**
**Tokyo 146-8501 (JP)**

(72) Inventors:
• **SATO, Shunsuke**
**Ohta-ku, Tokyo, 146-8501 (JP)**
• **IMAI, Ayato**
**Ohta-ku, Tokyo, 146-8501 (JP)**
• **SOEDA, Yujiro**
**Ohta-ku, Tokyo, 146-8501 (JP)**
• **UESAKA, Yoshifumi**
**Ohta-ku, Tokyo, 146-8501 (JP)**
• **FUJIKI, Masakazu**
**Ohta-ku, Tokyo, 146-8501 (JP)**

(74) Representative: **TBK**
**Bavariaring 4-6**
**80336 München (DE)**

(54) **IMAGING DEVICE, AND METHOD FOR CONTROLLING IMAGING DEVICE**

(57) An imaging device is characterized by comprising identification means for identifying a user of the imaging device, determination means for determining a state of continuous use of the imaging device by the user, and control means for performing control such that information of the user is recorded in a memory in association with an image captured by the imaging device between a time at which the user is identified by the identification means and a time at which it is determined by the determination means that use of the imaging device by the user is not continuing.

**FIG. 4**

IMAGE CAPTURING UNIT ~401

USER IDENTIFICATION UNIT ~402

CONTINUOUS USE DETERMINATION UNIT ~403

RECORDING UNIT ~404

EP 4 642 042 A2

**Description**

BACKGROUND OF THE INVENTION

Field of the Invention

The present invention relates to a technology for authenticating and recording a photographer.

Description of the Related Art

In recent years, there are demands for a technique for identifying a person who took an image or video and recording the person for the purpose of managing copyright or assuring authenticity. Japanese Patent Laid-Open No. 2018-191194 proposes a method for monitoring biometric information of a photographer when identifying the photographer and recording information of the photographer in an image file, and if there is a change in the monitoring result, canceling authentication of the photographer determining that the photographer has changed.

According to the method proposed in Japanese Patent Laid-Open No. 2018-191194, the convenience of image capturing may decrease due to the authentication being canceled while a series of images are captured.

SUMMARY OF THE INVENTION

The present invention provides a technology for improving the convenience of a device that authenticates and records a photographer.

The present invention in its first aspect provides an imaging device as specified in claims 1 to 21.

The present invention in its second aspect provides a method for controlling an imaging device as specified in claim 22.

Further features of the present invention will become apparent from the following description of exemplary embodiments with reference to the attached drawings.

BRIEF DESCRIPTION OF THE DRAWINGS

FIG. 1A is a front perspective view of a camera 100.
FIG. 1B is a rear perspective view of the camera 100.
FIG. 1C is a diagram showing an operation lever.
FIG. 2 is a cross-sectional view of the camera 100 taken along a YZ plane.
FIG. 3 is a block diagram showing an electrical configuration in the camera 100.
FIG. 4 is a block diagram showing a functional configuration example of the camera 100.
FIG. 5 is a flowchart showing processing performed by the camera 100.
FIG. 6 is a flowchart showing details of processing performed in step S503.
FIG. 7 is a flowchart showing details of processing performed in step S503.
FIG. 8 is a flowchart showing details of processing performed in step S503.
FIG. 9A is a diagram showing a display example of a screen displayed on a display panel in a "state of continuous use by a user P".
FIG. 9B is a diagram showing a display example of a screen displayed on the display panel in a "user unidentified state".
FIG. 9C is a diagram showing a display example of a screen displayed when it is determined that the user P of the camera 100 is not continuing the use of the camera 100.
FIG. 10 is a diagram showing a display example of a screen displayed on the display panel in response to a touch on a setting mode.
FIG. 11 is a block diagram showing a functional configuration example of the camera 100 in a sixth embodiment.
FIG. 12 is a flowchart showing details of processing performed in step S503 in the sixth embodiment.
FIG. 13 is a flowchart showing processing performed by the camera 100 in a variation of the sixth embodiment.
FIG. 14 is a block diagram showing a functional configuration example of the camera 100 in a seventh embodiment.
FIG. 15 is a flowchart showing details of processing performed in step S503 in the seventh embodiment.
FIG. 16 is a flowchart showing details of processing performed in step S503 in variation 1 of the seventh embodiment.
FIG. 17 is a flowchart showing details of processing performed in step S503 in variation 2 and variation 3 of the seventh embodiment.

FIG. 18 is a flowchart showing details of processing performed in step S503 in an eighth embodiment and variation 1 thereof.

FIG. 19 is a flowchart showing details of processing performed in step S503 in variation 2 and variation 3 of the eighth embodiment.

FIG. 20 is a flowchart showing details of processing performed in step S503 in a ninth embodiment and variation 1 thereof.

FIG. 21 is a flowchart showing details of processing performed in step S503 in variation 2 of the ninth embodiment.

FIG. 22 is a flowchart showing details of step S503 in a tenth embodiment.

FIG. 23 is a block diagram showing a functional configuration example of the camera 100 in an eleventh embodiment.

FIG. 24 is a flowchart showing details of processing performed in the eleventh embodiment.

FIG. 25A shows a display example of a display panel of an eyepiece 102 in the eleventh embodiment.

FIG. 25B shows a display example of the display panel of the eyepiece 102 in the eleventh embodiment.

FIG. 25C shows a display example of the display panel of the eyepiece 102 in the eleventh embodiment.

FIG. 26 is a block diagram showing a functional configuration example of the camera 100 in a twelfth embodiment.

FIG. 27 is a flowchart showing details of processing performed in the twelfth embodiment.

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

(First Embodiment)

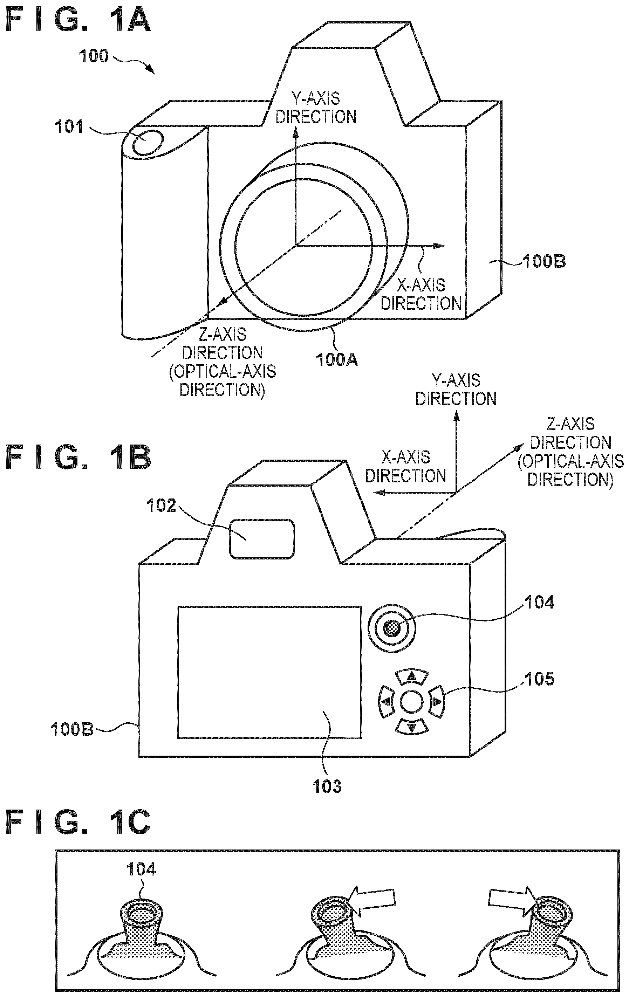

First, the following describes an example of an appearance of a camera 100 (digital still camera; camera with replaceable lenses) that is an example of an imaging device according to the present embodiment with reference to FIGS. 1A, 1B, and 1C. FIG. 1A is a front perspective view of the camera 100 and FIG. 1B is a rear perspective view of the camera 100. In FIGS. 1A and 1B, the direction of an optical axis of the camera 100 is defined as a Z-axis direction, and out of two axes orthogonal to the Z axis, a horizontal direction is defined as an X-axis direction, and a vertical direction is defined as a Y-axis direction for the sake of convenience of description.

As shown in FIG. 1A, the camera 100 includes an image capturing lens unit 100A and a camera housing 100B. A release button 101 that is an operation member for accepting input of operations made by a user of the camera 100 (photographer) to take images is provided on the camera housing 100B.

As shown in FIG. 1B, an eyepiece 102 (finder) through which the user looks in to view a display device 214 (display panel) inside the camera housing 100B is provided on the rear surface of the camera housing 100B. Also, operation members 103 to 105 that accept various operations made by the user are provided on the rear surface of the camera housing 100B. The operation member 103 is, for example, a touch panel that accepts touch operations made by the user, and the operation member 104 is, for example, an operation lever that can be slanted in different directions as shown in FIG. 1C. The operation member 105 is, for example, four-directional keys that are respectively arranged in four directions and can be pressed. The operation member 103 (touch panel) includes a display panel (e.g., a liquid crystal panel), and various types of information such as images and letters are displayed on the display panel.

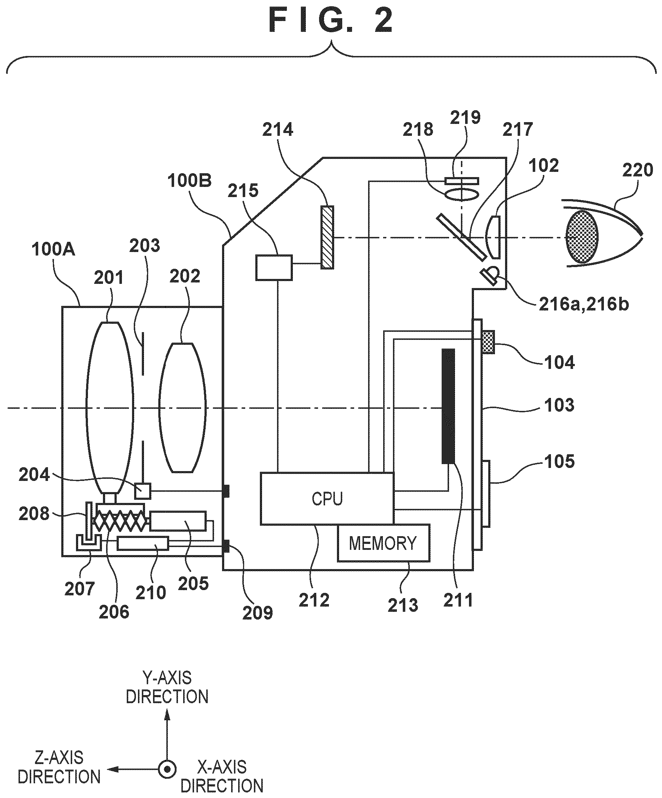

FIG. 2 is a cross-sectional view of the camera 100 taken along a YZ plane defined by the Y axis and the Z axis shown in FIG. 1A, and shows a schematic internal configuration of the camera 100 including structures relating to the following description. In FIG. 2, functional units that are the same as the functional units shown in FIGS. 1A, 1B, and 1C are denoted by the same reference numbers as those used in FIGS. 1A, 1B, and 1C, and descriptions of those functional units are omitted.

The image capturing lens unit 100A includes two lenses 201 and 202, a diaphragm 203, a diaphragm driving unit 204, a lens driving motor 205, a lens driving member 206, a photocoupler 207, a pulse plate 208, a mount contact 209, and a focus adjusting circuit 210.

The lens driving member 206 includes a driving gear, and the photocoupler 207 detects rotation of the pulse plate 208 interlocked with the lens driving member 206 and transmits the detection result to the focus adjusting circuit 210. Based on the detection result received from the photocoupler 207 and information (information indicating a lens driving amount) received from the camera housing 100B, the focus adjusting circuit 210 drives the lens driving motor 205 to move the lens 201 and change the focus position. The mount contact 209 is an interface for communication between the image capturing lens unit 100A and the camera housing 100B. Although FIG. 2 shows the two lenses 201 and 202 to simplify the drawing, the image capturing lens unit 100A actually includes more than two lenses. The diaphragm driving unit 204 controls driving of the diaphragm 203 to control opening and closing of the aperture.

The camera housing 100B includes an imaging element 211, a CPU 212, a memory 213, a display device 214, and a display device driving circuit 215. The imaging element 211 performs photoelectric conversion on an image of a subject obtained through the lenses 201 and 202 to convert the image to a RAW image. The CPU 212 is a central processing unit of a microcomputer and controls operations of the entire camera 100 with use of a computer program and data stored in the memory 213. The memory 213 is capable of storing various types of information, and the CPU 212 stores in the memory 213, for example, a captured image generated by performing various types of image processing including developing processing on a RAW image output from the imaging element 211. The display device 214 displays various types of information such as images and letters. For example, the display device 214 is a liquid crystal panel, and displays the captured image described above and various types of information. The display device driving circuit 215 controls driving of the display device 214. The user can view a screen on the display device 214 via the eyepiece 102.

The camera housing 100B further includes light sources 216a and 216b, a light splitter 217, a light receiving lens 218, and an eye imaging element 219. The light sources 216a and 216b are light sources that have been conventionally used in single-lens reflex cameras to detect the line of sight from a relationship between a reflected image (corneal reflected image) formed by corneal reflection of light and the pupil, and are used to illuminate an eyeball 220 of the user looking through the finder (eyepiece 102). The light sources 216a and 216b are, for example, infrared light emitting diodes that emit invisible infrared light toward the user, and are arranged around the eyepiece 102. An eye optical image (optical image formed by light emitted from the light sources 216a and 216b and reflected by the eyeball 220), which is an optical image of the illuminated eyeball 220, passes through the eyepiece 102 and is reflected by the light splitter 217. The eye optical image is formed by the light receiving lens 218 on the eye imaging element 219 including a plurality of photoelectric conversion elements (e.g., CCDs or CMOSs) arranged in a two-dimensional array. The light receiving lens 218 positions the pupil of the eyeball 220 and the eye imaging element 219 in a conjugated image formation relationship. From the position of the corneal reflected image in the eye optical image formed on the eye imaging element 219, it is possible to detect the line of sight of the eyeball 220 and to obtain information regarding the line of sight as the detection result. For example, it is possible to obtain, as the information regarding the line of sight, at least one of information indicating a line-of-sight direction (the direction of the line of sight) and information indicating a viewpoint (the point toward which the line of sight is directed) on a screen of the display device 214. The viewpoint may be considered to be the position seen by the user or the position of the line of sight. Then, the eye imaging element 219 outputs the formed eye optical image (captured image of the eyeball 220) as an eye image (analog image signal).

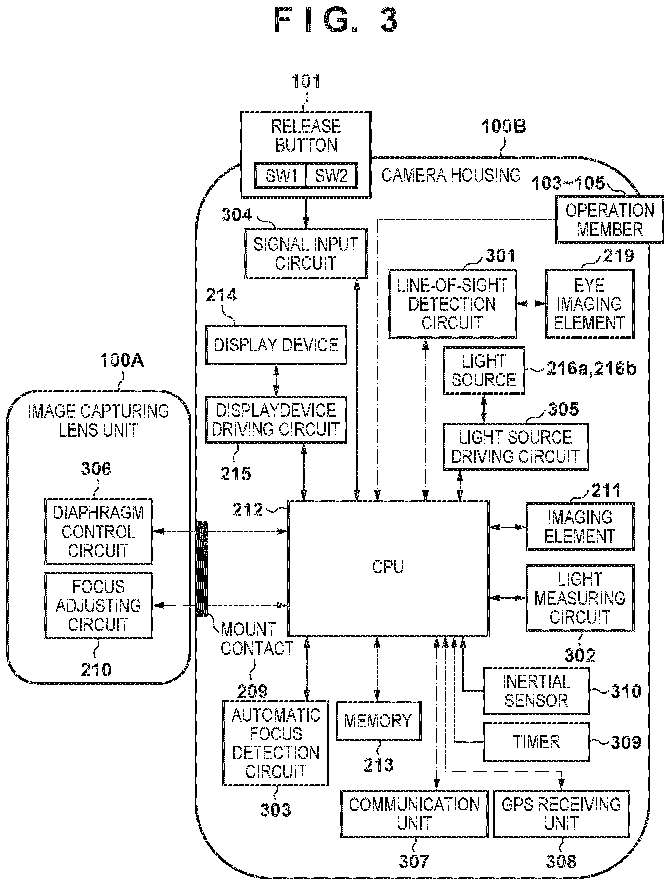

Next, the following describes an electrical configuration in the camera 100 with reference to the block diagram shown in FIG. 3. The CPU 212 can transmit signals to the focus adjusting circuit 210 in the image capturing lens unit 100A and a diaphragm control circuit 306 included in the diaphragm driving unit 204 in the image capturing lens unit 100A via the mount contact 209. For example, the CPU 212 can transmit information indicating a lens driving amount to the focus adjusting circuit 210 via the mount contact 209. Also, the CPU 212 can transmit information indicating a driving amount of the diaphragm 203 to the diaphragm control circuit 306 via the mount contact 209. Also, the CPU 212 controls operations of the other units.

The memory 213 can store captured images, eye images, line-of-sight correction parameters for correcting a detected line of sight, and the like. A line-of-sight detection circuit 301 performs A/D conversion on an eye image (analog image signal) that is output from the eye imaging element 219 in a state where an eye optical image is formed on the eye imaging element 219 and generates an eye image that is a digital image signal. Then, the line-of-sight detection circuit 301 extracts a feature point necessary to detect the line of sight from the generated eye image, i.e., the digital image signal, detects the line of sight of the user from the position of the feature point, and outputs information regarding the line of sight as the detection result. Also, the line-of-sight detection circuit 301 stores the generated eye image, i.e., the digital image signal, in the memory 213.

A light measuring circuit 302 performs predetermined processing (e.g., amplification, logarithmic compression, and A/D conversion) on an image signal, such as a brightness signal corresponding to the brightness of the subject field, obtained from the imaging element 211 that also serves as a light measuring sensor, and transmits the result of processing as subject field brightness information to the CPU 212.

An automatic focus detection circuit 303 performs A/D conversion on signals output from a plurality of detection elements (a plurality of pixels) included in the imaging element 211 and used for phase difference detection, and calculates a distance to the subject corresponding to each focus detection point from the output signals subjected to the A/D conversion. This is a known technology known as image plane phase difference AF.

A switch SW1 and a switch SW2 of the release button 101 are connected to a signal input circuit 304. The switch SW1 is a switch for outputting an ON signal in response to a first stroke of the release button 101 to start imaging preparation operations (e.g., light measurement and distance measurement) of the camera 100. The switch SW2 is a switch for outputting an ON signal in response to a second stroke of the release button 101 to start imaging operations. The ON signals output from the switches SW1 and SW2 are input to the signal input circuit 304 and transmitted to the CPU 212. Upon receiving the ON signal from the switch SW1, the CPU 212 controls operations of respective units to start the imaging preparation operations of the camera 100. Upon receiving the ON signal from the switch SW2, the CPU 212 controls operations of respective units to start the imaging operations. The detection of the line of sight may be started in response to the switch SW1 being turned on. A light source driving circuit 305 controls driving of the light sources 216a and 216b.

Furthermore, the operation members 103 to 105 are also connected to the CPU 212. When the user operates the operation members 103 to 105, the operation members 103 to 105 output operation signals corresponding to the operations made by the user to the CPU 212, and the CPU 212 performs processing (control) corresponding to the operation signals. For example, the CPU 212 moves a frame (item, indicator) displayed at the viewpoint in response to an operation signal.

A communication unit 307, a GPS receiving unit 308, a timer 309, and an inertial sensor 310 are also connected to the CPU 212. The communication unit 307 obtains GPS positional information of an information device such as a smartphone, a tablet terminal, a smartwatch, or a PC held by the user by performing wireless communication with the information device. Examples of the wireless communication include Wi-Fi and Bluetooth, but there is no limitation to these examples. The GPS receiving unit 308 receives radio waves from GPS satellites and obtains GPS positional information of the camera 100. The timer 309 outputs the current time. The inertial sensor 310 (e.g., an acceleration sensor and an angular speed sensor) outputs an acceleration rate and an angular speed of the camera 100 as output values.

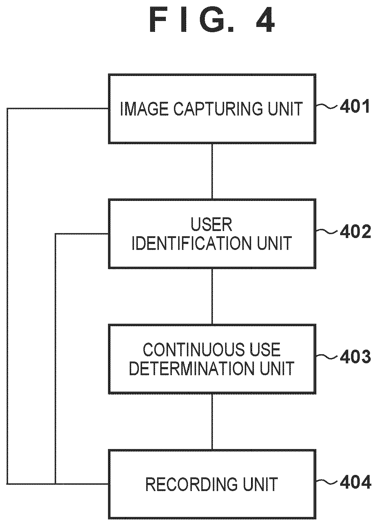

A functional configuration example of the camera 100 relating to processing described below is shown in the block diagram of FIG. 4. In the present embodiment, each functional unit shown in FIG. 4 is implemented with use of hardware. Each functional unit can be implemented with use of one or more pieces of hardware shown in FIGS. 2 and 3, and operates under control performed by the CPU 212.

Note that one or more functional units shown in FIG. 4 may also be implemented with use of software (computer program). In this case, the computer program is stored in the memory 213, and functions of the corresponding functional units are realized by the CPU 212 by executing the computer program.

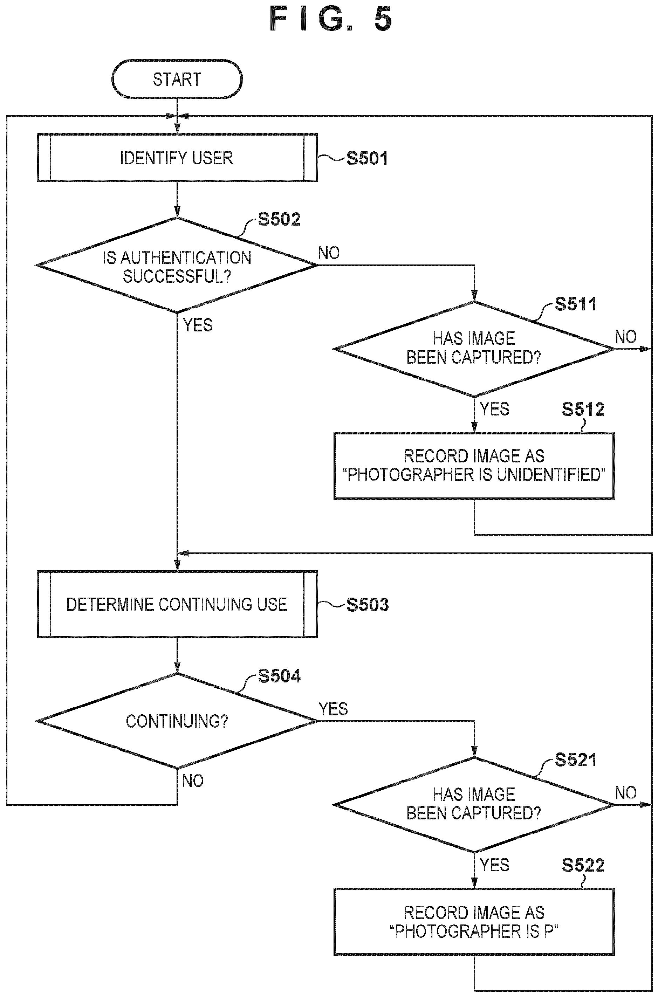

The following describes, with reference to the flowchart shown in FIG. 5, processing that the camera 100 according to the present embodiment performs to identify the user of the camera 100 and store a captured image in association with the identification result in the memory 213. Note that the processing performed in accordance with the flowchart shown in FIG. 5 is started when a power source of the camera 100 is turned on and the camera 100 is booted to be ready to be used, and is repeated until it becomes no longer possible to continue the processing due to the power source of the camera 100 being turned off, for example.

In step S501, a user identification unit 402 performs processing for identifying the user of the camera 100 by performing iris recognition on an eye image stored in the memory 213. In step S502, the user identification unit 402 determines whether or not the user of the camera 100 has been successfully identified in step S501.

If it is determined that the user of the camera 100 has been successfully identified in step S501, the processing proceeds to step S503, and if it is determined that the user of the camera 100 has not been successfully identified in step S501, the processing proceeds to step S511.

For example, the user identification unit 402 identifies, as a similar registered iris, a registered iris that is the most similar to an iris detected from the eye image, out of irises (registered irises) of respective users registered in the memory 213 in advance. Then, the user identification unit 402 identifies a user corresponding to the similar registered iris as the user of the camera 100.

Note that, if the degree of similarity between the iris detected from the eye image and the similar registered iris is lower than a threshold, the user identification unit 402 determines that the identification of the user failed. Also, if no one is looking in through the finder 102 and the eye image does not include an iris, no iris is recognized from the eye image, and therefore, the user identification unit 402 determines that the identification of the user failed. Also, if something other than an eyeball is in contact with the finder 102, no iris is recognized from the eye image, and therefore, the user identification unit 402 determines that the identification of the user failed.

In step S511, a continuous use determination unit 403 determines whether or not an image has been captured by an image capturing unit 401 that functions as the image capturing lens unit 100A in response to the release button 101 being pressed, for example. If it is determined that an image has been captured by the image capturing unit 401, the processing proceeds to step S512, and if it is determined that no image has been captured by the image capturing unit 401, the processing proceeds to step S501.

In step S512, a recording unit 404 adds photographer information indicating that "the photographer is unidentified" as metadata to the image captured by the image capturing unit 401. Then, the recording unit 404 records the captured image (captured image file) to which the metadata has been added in the memory 213. Then, the processing proceeds to step S501.

On the other hand, in step S503, the continuous use determination unit 403 determines whether or not the user (hereinafter referred to as "the user P") of the camera 100 identified in step S501 is continuing the use of the camera 100. Details of the processing performed in step S503 will be described later.

If it is determined that the user P is continuing the use of the camera 100, the processing proceeds to step S521 via step S504, and if it is determined that the user P is not continuing the use of the camera 100, the processing proceeds to step S501 via step S504.

In step S521, the continuous use determination unit 403 determines whether or not an image has been captured by the image capturing unit 401 in response to the release button 101 being pressed, for example, similarly to step S511 described above. If it is determined that an image has been captured by the image capturing unit 401, the processing proceeds to step S522, and if it is determined that no image has been captured by the image capturing unit 401, the processing proceeds to step S503.

In step S522, the recording unit 404 adds photographer information indicating that "the photographer is the user P" as metadata to the image captured by the image capturing unit 401. Then, the recording unit 404 records the captured image (captured image file) to which the metadata has been added in the memory 213. Then, the processing proceeds to step S503.

As described above, the continuous use determination unit 403 defines a period during which the camera 100 is continuously used by the user P as a "range of continuous use by the user P", and photographer information indicating that "the photographer is the user P" is added as metadata to images captured within the range of continuous use.

Note that the method for recording the photographer information is not limited to the method of adding the photographer information as metadata to a captured image. For example, it is possible to store a hash value of the captured image and the photographer information in association with each other in a table, or upload a record including the captured image and the photographer information by accessing an external server via a communication path of wireless communication or the like. It is also possible to use a method for preventing falsification or assuring authenticity, such as encryption or electronic signature, in combination with these pieces of information. A configuration is also possible in which the recording unit 404 stores the image captured by the image capturing unit 401 in the memory 213 without adding photographer information indicating that "the photographer is unidentified" to the captured image in step S512.

As described above, the recording unit 404 performs control such that images captured by the camera 100 between the time at which the user of the camera 100 is identified and the time at which it is determined that the use of the camera 100 by the user is not continuing are recorded in association with information of the user in the memory 213.

Also, the recording unit 404 performs control such that, if the user of the camera 100 has not been identified, an image captured by the camera 100 is recorded in the memory in association with information indicating that the user of the camera 100 has not been identified.

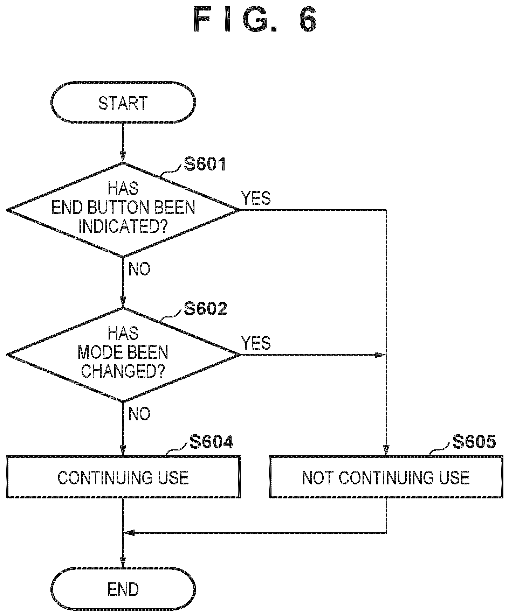

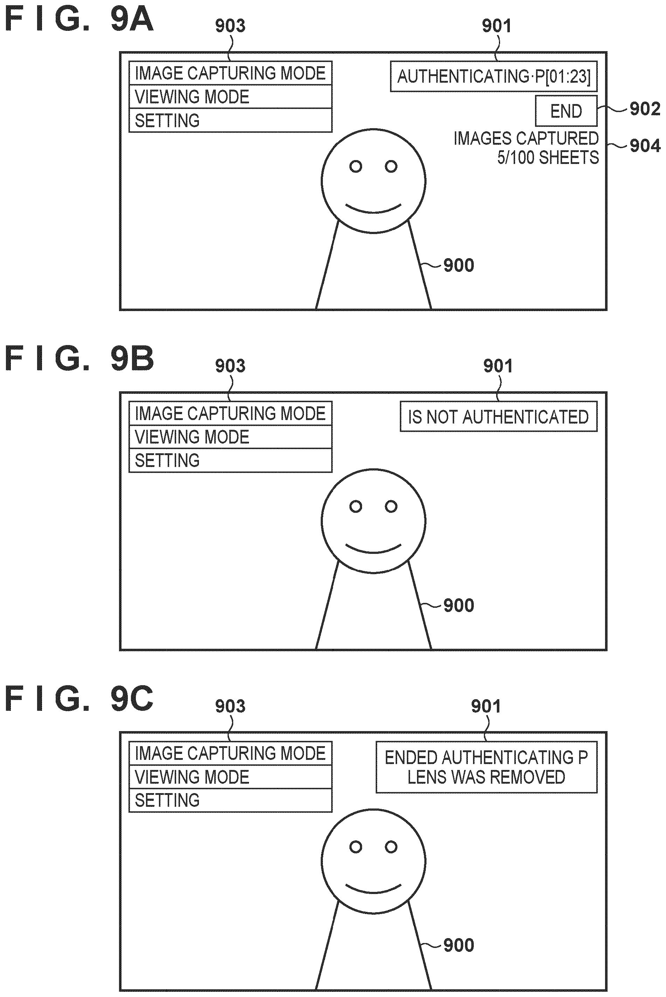

Next, the following describes details of the processing performed in step S503 described above with reference to the flowchart shown in FIG. 6. In step S601, the continuous use determination unit 403 determines whether or not an end button included in at least one of the operation members 103 to 105 has been indicated by the user P. For example, if the operation member 103 is a display panel shown in FIG. 9A, the continuous use determination unit 403 determines that an end button included in the operation member 103 has been indicated by the user P in response to a button 902 displayed on the display panel being touched by the user P.

Note that the end button is not limited to a button displayed on a display panel, and may also be a physical button. It is also possible to determine that an end button included in an operation lever such as the operation member 104 has been indicated in response to the operation member 104 being pressed down. It is also possible to determine that an end button has been indicated in response to a power source button or the like being indicated. If it is determined that the end button has been indicated, the processing proceeds to step S605, and if it is determined that the end button has not been indicated, the processing proceeds to step S602.

In step S602, the continuous use determination unit 403 determines whether or not a mode change operation has been made by the user P on at least one of the operation members 103 to 105. For example, if the operation member 103 is the display panel shown in FIG. 9A, the continuous use determination unit 403 determines that a mode change operation has been made by the user P on the operation member 103 in response to a touch operation being made by the user P on a mode different from the current mode out of three modes included in a list 903 displayed on the display panel.

In the case shown in FIG. 9A, the list 903 includes three modes, i.e., a mode (image capturing mode) for capturing images, a mode (viewing mode) for causing the display panel to display information regarding a file stored in the memory 213, and a mode (setting mode) for performing setting of the camera 100. Accordingly, in response to a mode different from the mode currently set in the camera 100 out of these three modes being touched by the user P, the continuous use determination unit 403 determines that a mode change operation has been made by the user P on the operation member 103. If the mode currently set in the camera 100 is the image capturing mode, the mode change operation made by the user is an operation for changing the operating state of the camera to a state other than image capturing, and accordingly, this operation is considered to be an operation made by the user to end the image capturing.

If it is determined that a mode change operation has been made by the user P on at least one of the operation members 103 to 105, the processing proceeds to step S605. On the other hand, if a mode change operation has not been made by the user P on the operation members 103 to 105, the processing proceeds to step S604.

In step S604, the continuous use determination unit 403 determines that the user P is continuing the use of the camera 100. On the other hand, in step S605, the continuous use determination unit 403 determines that the user P is not continuing the use of the camera 100.

Note that operations that indicate the end of use of the camera 100 by the user P include various operations other than those described above, and the end of use of the camera 100 may be indicated by an operation for transmitting an end signal from a remote controller or a device that is wirelessly communicating with the camera. It is also possible to combine these methods or perform only a part of these methods.

The convenience of the device that stores information of the user together with a captured image is improved by determining whether or not the user has performed an operation for ending image capturing and by defining a period between the time at which the user is identified and the time at which an operation for ending image capturing is performed by the user, as the continuous use range.

Note that the method for identifying the user of the camera 100 is not limited to iris recognition. For example, the camera 100 may identify the user of the camera 100 with use of other types of biometric information such as a fingerprint, veins, or the face, or identify the user of the camera 100 by letting the user enter authentication information such as an identification number or a password. It is also possible to identify the user of the camera 100 by letting the camera 100 read authentication information such as an identification number or a password of the user from a recording medium such as an ID card on which the information is recorded. It is also possible to connect an authentication dongle used for such authentication to the camera 100. Alternatively, the above authentication may be performed through wireless communication with an authentication device such as a smartphone or a smartwatch in the vicinity of the camera 100, or two-step authentication may also be performed by combining these methods.

As described above, the method (authentication method) for identifying the user of the camera 100 is not limited to a specific method, and the above authentication may be performed by the camera 100 alone or through communication with another device.

In the present embodiment, the memory 213 is provided inside the camera housing 100B, but the memory 213 may also be a "memory connected to the camera housing 100B in a physically detachable manner", such as an SD card or a USB memory.

<Variation>

It is also possible to determine the "end of use of the camera 100" at a timing when a use continue button that has been continuously pressed by the user is released by the user, rather than determining the end of use of the camera 100 in response to the user pressing an end button. In this case, whether or not the use continue button that has been continuously pressed by the user is released by the user is determined in step S601. If the use continue button that has been continuously pressed by the user is released by the user, the processing proceeds to step S605, and if the use continue button that has been continuously pressed by the user is not released by the user, the processing proceeds to step S602.

The use continue button can be provided as a button on a touch panel or an operation lever that is applicable to the operation members 103 to 105, and an improvement in the convenience is expected if the button is configured to be easy to press continuously while the user is holding the camera 100, by providing the button on a grip of the camera 100, for example.

That is to say, in step S601 of the present embodiment, the processing proceeds to step S602 in a state (input state) where an instruction (use continue instruction) to continue the use of the camera 100 is input. On the other hand, if the use continue instruction is no longer input in the input state in step S601, the processing proceeds to step S605. As described above, various methods may be used to input the use continue instruction.

(Second Embodiment)

In each embodiment described below including this embodiment, differences from the first embodiment will be described, and matter that is not particularly mentioned below is similar to that in the first embodiment. In the present embodiment, a method will be described for determining the continuous use range based on an operation from which the end of image capturing can be inferred, although the operation is not an explicit operation made by the user. Note that the following method may also be used in combination with the method for determining the continuous use range according to the first embodiment.

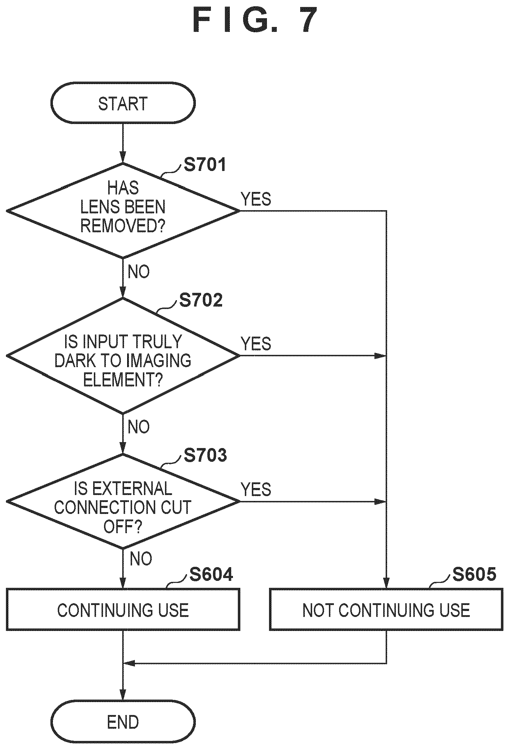

The following describes details of the processing performed in step S503 according to the present embodiment with reference to the flowchart shown in FIG. 7. In FIG. 7, processing steps that are the same as the processing steps shown in FIG. 6 are denoted by the same step numbers as those used in FIG. 6, and descriptions of those processing steps are omitted.

In step S701, the continuous use determination unit 403 obtains "information indicating whether or not the image capturing lens unit 100A is mounted on (connected to) the camera housing 100B" from the mount contact 209. Then, the continuous use determination unit 403 determines whether the obtained information indicates that "the image capturing lens unit 100A is mounted on the camera housing 100B" or "the image capturing lens unit 100A is not mounted on the camera housing 100B".

If it is determined that the obtained information indicates that "the image capturing lens unit 100A is mounted on the camera housing 100B (the image capturing lens unit 100A has not been removed from the camera housing 100B)", the processing proceeds to step S702.

On the other hand, if the obtained information indicates that "the image capturing lens unit 100A is not mounted on the camera housing 100B (the image capturing lens unit 100A has been removed from the camera housing 100B)", the processing proceeds to step S605.

In step S702, the continuous use determination unit 403 obtains "information indicating brightness of input to the imaging element 211" from the mount contact 209. Then, the continuous use determination unit 403 determines whether or not the "brightness of input to the imaging element 211" indicated by the obtained information is equal to or lower than a threshold, e.g., whether or not the camera is in such a state where the input is completely dark due to a lens cap being attached to the image capturing lens unit 100A, for example.

If it is determined that the "brightness of input to the imaging element 211" indicated by the obtained information is equal to or lower than the threshold, the processing proceeds to step S605, and if it is determined that the "brightness of input to the imaging element 211" indicated by the obtained information is higher than the threshold, the processing proceeds to step S703.

In step S703, the continuous use determination unit 403 obtains "information indicating whether or not an external device is connected to the camera 100" from a communication module included in the camera 100. Then, the continuous use determination unit 403 determines whether or not the obtained information indicates that "an external device is connected to the camera 100".

If it is determined that the obtained information indicates that "an external device is not connected to the camera 100" (communication between the camera 100 and an external device has been cut off), the processing proceeds to step S605. On the other hand, if the obtained information indicates that "an external device is connected to the camera 100" (communication between the camera 100 and the external device has not been cut off), the processing proceeds to step S604.

Note that, in the present embodiment, the following three operations: "determining whether or not the image capturing lens unit 100A is mounted on the camera housing 100B", "determining whether or not the brightness of input to the imaging element 211 is equal to or lower than the threshold", and "determining whether or not communication between the camera 100 and an external device has been cut off" are described as examples of operations for inferring whether or not image capturing by the camera 100 has ended. However, operations for inferring whether or not image capturing by the camera 100 has ended are not limited to these three operations. For example, a configuration is also possible in which, if it is detected that an accessory such as a stroboscope or a release cable, other than lenses, has been removed from the camera housing 100B, it is determined that image capturing by the camera 100 has ended. Alternatively, a configuration is also possible in which, if an operation for opening a battery cover or an operation for removing an SD card is detected, it is determined that image capturing by the camera 100 has ended. It is also possible to combine these methods or perform only a part of these methods.

As described above, if the continuous use range is determined based on an operation from which the end of image capturing can be inferred even if the operation is not an explicit operation made by the user, the convenience of the device that authenticates and records the photographer is improved.

(Third Embodiment)

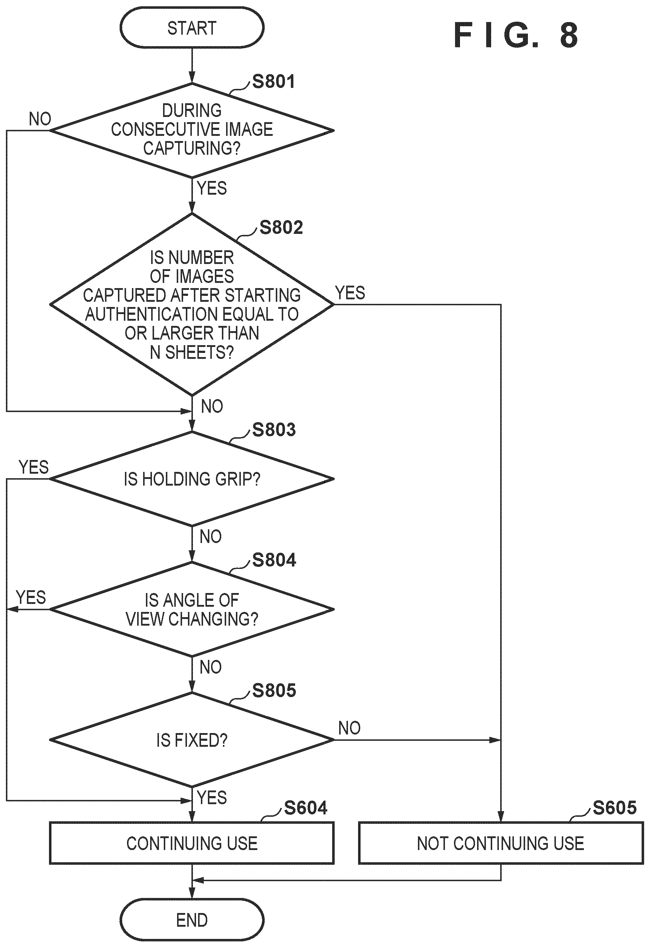

In the present embodiment, a method for determining a period during which the user is performing an operation for image capturing as the continuous use range will be described. The following describes details of the processing performed in step S503 according to the present embodiment with reference to the flowchart shown in FIG. 8. In FIG. 8, processing steps that are the same as the processing steps shown in FIG. 6 are denoted by the same step numbers as those used in FIG. 6, and descriptions of those processing steps are omitted.

In step S801, the continuous use determination unit 403 determines whether or not consecutive image capturing is being performed with the release button 101 held down. If it is determined that consecutive image capturing is being performed with the release button 101 held down, the processing proceeds to step S802, and if it is determined that consecutive image capturing is not being performed by holding down the release button 101, the processing proceeds to step S803.

In step S802, the continuous use determination unit 403 determines whether or not the number of images captured after the iris recognition is equal to or larger than a maximum number N of captured images determined in advance. After the iris recognition, the continuous use determination unit 403 counts up the number of captured images every time an image is captured.

If it is determined that the number of images captured after the iris recognition is equal to or larger than the maximum number N of captured images determined in advance, the processing proceeds to step S605, and if it is determined that the number of images captured after the iris recognition is smaller than the maximum number N of captured images determined in advance, the processing proceeds to step S803.

In step S803, the continuous use determination unit 403 determines whether or not the user is holding a grip provided on the camera housing 100B with use of a contact sensor provided on the grip.

If it is determined that the user is holding the grip, the processing proceeds to step S604, and if it is determined that the user is not holding the grip, the processing proceeds to step S804.

In step S804, the continuous use determination unit 403 determines whether or not the direction (orientation) that the camera 100 faces is changing with use of a gyrosensor included in the camera housing 100B. For example, if a difference between a direction previously measured by the gyrosensor and a direction currently measured by the gyrosensor is equal to or larger than a threshold, the continuous use determination unit 403 determines that the direction (orientation) that the camera 100 faces is changing.

If it is determined that the direction (orientation) that the camera 100 faces is changing, the processing proceeds to step S604, and if it is determined that the direction (orientation) that the camera 100 faces is not changing, the processing proceeds to step S805.

Here, a bottom portion of the camera housing 100B according to the present embodiment includes a fixing screw hole and a screw detection sensor for detecting whether or not a screw has been fixed to the fixing screw hole. If the camera housing 100B is fixed to a device such as a tripod or a pan head, the camera housing 100B can be fixed to the device by attaching the camera housing 100B to the device and then fixing a screw to the fixing screw hole.

In step S805, the continuous use determination unit 403 determines whether or not a screw has been fixed to the fixing screw hole with use of the screw detection sensor. If it is determined that a screw has been fixed to the fixing screw hole, the processing proceeds to step S604, and if it is determined that the screw has not been fixed to the fixing screw hole, the processing proceeds to step S605.

As described above, in the present embodiment, a period during which the user is performing an operation for image capturing is determined as the continuous use range, and thus the convenience of the device that authenticates and records the photographer is improved.

(Fourth Embodiment)

It can be inferred that the camera 100 is being continuously used while the camera 100 itself is moving due to the user carrying the camera 100 or rotating the camera 100 toward the subject, for example. Therefore, an inertial sensor, a gyrosensor, or the like is installed in the camera 100 to detect movement of the camera 100, and the continuous use determination unit 403 determines a period during which movement of the camera 100 is detected as the continuous use range.

It is also possible to determine that the camera 100 is being continuously used while the camera 100 is located within a specific geographical range, for example, with use of the position of the camera 100. A position measuring device such as a GPS device is installed in the camera 100, and the continuous use determination unit 403 determines a period during which the position measured by the position measuring device is within a specific range as the continuous use range.

It is also possible to install a clock in the camera 100 and determine a specific time range as the continuous use range. A configuration is also possible in which, if similar images are being captured, it is determined that the camera is being continuously used to take a series of images. The continuous use determination unit 403 evaluates the degree of similarity between the consecutively captured images based on a difference image or a statistical amount, and a period during which images having a degree of similarity equal to or lower than a threshold are captured is determined as the continuous use range.

Note that the methods described above are examples of methods for determining the continuous use range, and are not intended to limit the present invention to these methods. If the continuous use range is determined with use of various types of information as described above, the convenience of the device that authenticates and records the photographer is improved.

(Fifth Embodiment)

In the present embodiment, screens that are displayed in connection with the processing in the above embodiments will be described. Here, a state where the user is not identified in steps S501 and S502 in the flowchart shown in FIG. 5 and the processing is repeated in a loop will be referred to as a "user unidentified state", for example. Also, a state where it is continuously determined in steps S503 and S504 that the camera is being continuously used and the processing is performed in a loop will be referred to as a "state of continuous use by the user P" (the user P is the user identified in step S501). Note that the CPU 212 performs processing relating to display, i.e., display control for displaying a screen, or switching the screen or changing display in response to a user operation, for example.

FIG. 9A is a diagram showing a display example of a screen displayed on a display panel, which is the operation member 103, in the "state of continuous use by the user P". The screen shown in FIG. 9A includes a subject 900, display 901 showing the user (user P) of the camera 100 and a time elapsed from iris recognition, a mode selection list 903, and an end button 902. Also, the screen includes display 904 showing the number of images captured after the iris recognition/the maximum number N of captured images (N=100 in this example).

FIG. 9B is a diagram showing a display example of a screen displayed on the display panel, which is the operation member 103, in the "user unidentified state". The display 901 indicates that the user has not been identified through iris recognition.

Note that the camera 100 may also be configured to enable the user to grasp the remaining number of images that can be captured with use of the display 904 described above by, for example, changing the color or size of the display 904 or making a sound when the number of captured images is close to N.

If it is determined by the continuous use determination unit 403 that the user P of the camera 100 is not continuing the use of the camera 100, a screen shown in FIG. 9C may also be displayed on the display panel, which is the operation member 103. The display 901 includes a message indicating the end of the continuous use of the camera 100 by the user P and a reason for ending. A configuration is also possible in which the display 901 is displayed only for a prescribed period of time (e.g., 5 seconds). In the example shown in FIG. 9C, the display 901 indicates that the reason for ending is that it was determined in step S701 that the image capturing lens unit 100A was removed from the camera housing 100B.

This configuration enables the user to understand the reason even if the use of the camera ended unintentionally. In order to make it easier for the user to notice such a case, it is also possible to emphasize the display by changing the color of the entire screen or to make a sound, for example.

Note that the pieces of information described above may also be displayed on the display device 214, rather than the display panel of the operation member 103, so that the information is superposed on the finder, or may be displayed on both the display panel and the display device.

As another display method, it is also possible to provide an LED lamp on the camera 100, turn on the LED lamp in the "continuous use state", turn off the LED lamp in the "user unidentified state", and cause the LED lamp to flash when the continuous use ends. At this time, it is possible to display similar information by changing the color of the LED lamp for each user, for example. It is also possible to perform additional control to turn off the LED lamp while the shutter is opened, so that the light of the LED lamp will not affect the image.

As another method, it is also possible to notify the user of the state of the continuous use range with use of shutter sounds. Different shutter sounds are set for respective users P as shutter sounds that are output in response to the release button 101 being pressed in the "state of continuous use by the user P", and a shutter sound different from all of those shutter sounds is output in response to the release button 101 being pressed in the "user unidentified state". This enables the user to recognize whether or not the current state is within the continuous use range and which user has been authenticated and recorded as the photographer of the image. It is also possible to output sounds in response to the release button being pressed halfway down, rather than outputting shutter sounds after the shutter is opened.

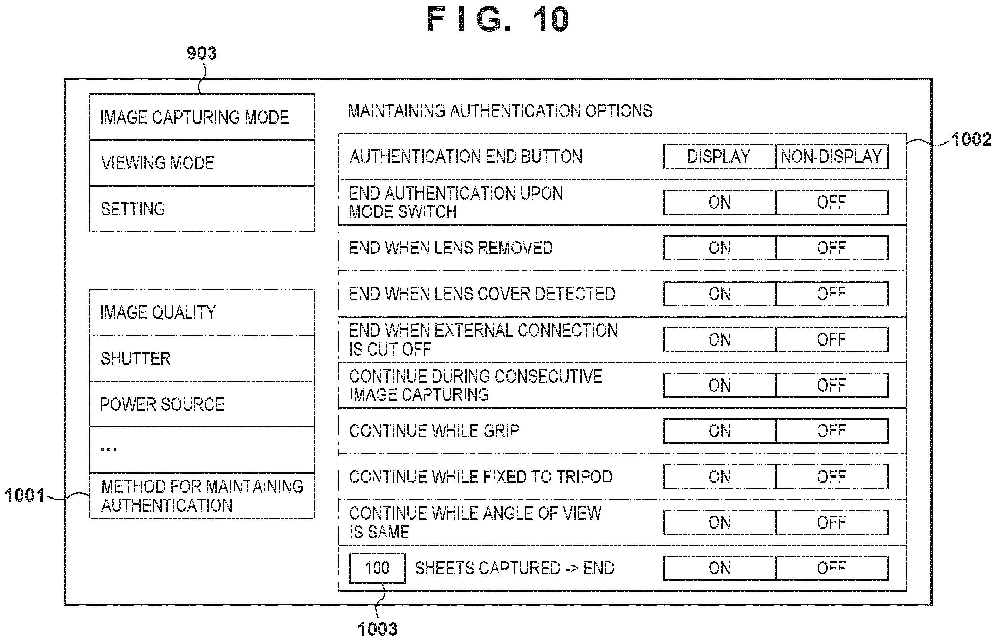

Here, when the setting mode included in the list 903 is touched by the user, a screen shown in FIG. 10 is displayed on the display panel, which is the operation member 103. The screen shows a list 1001 of items that can be set, and a list 1002 is displayed in response to the user touching "method for maintaining authentication" included in the list 1001.

The list 1002 is for enabling (turning on) or disabling (turning off) each of the above-described various methods for determining whether or not the user of the camera 100 is continuing the use of the camera 100, and for selecting whether or not to display the end button 902. Also, the list 1002 includes a number box 1003. The user can enter the maximum number N of captured images in the number box 1003. If the state of the camera 100 is displayed for the user and each user is allowed to perform setting as described above, the convenience of the device that authenticates and records the photographer is further improved.

(Sixth Embodiment)

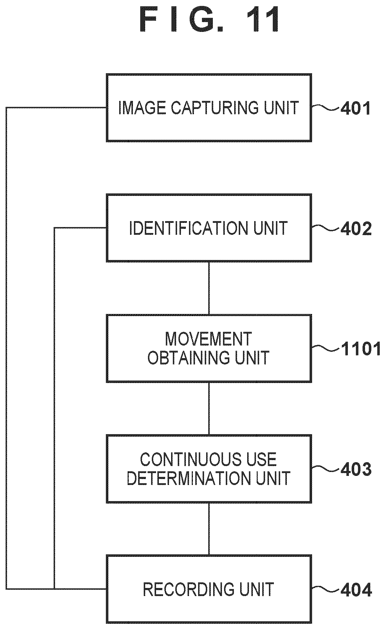

In the present embodiment, a method for determining the continuous use range based on information indicating movement of the camera in a space will be described. A functional configuration example of the camera 100 relating to processing described below is shown in the block diagram of FIG. 11. The functional blocks include the image capturing unit 401, the identification unit 402, a movement obtaining unit 1101, the continuous use determination unit 403, and the recording unit 404. The image capturing unit 401, the identification unit 402, and the recording unit 404 are the same as those in the first embodiment, and therefore, descriptions thereof are omitted.

The movement obtaining unit 1101 obtains information indicating an acceleration rate and an angular speed of the camera 100 from the inertial sensor 310. The continuous use determination unit 403 according to the present embodiment determines whether or not the user is continuously using the camera 100 based on movement information obtained by the movement obtaining unit 1101.

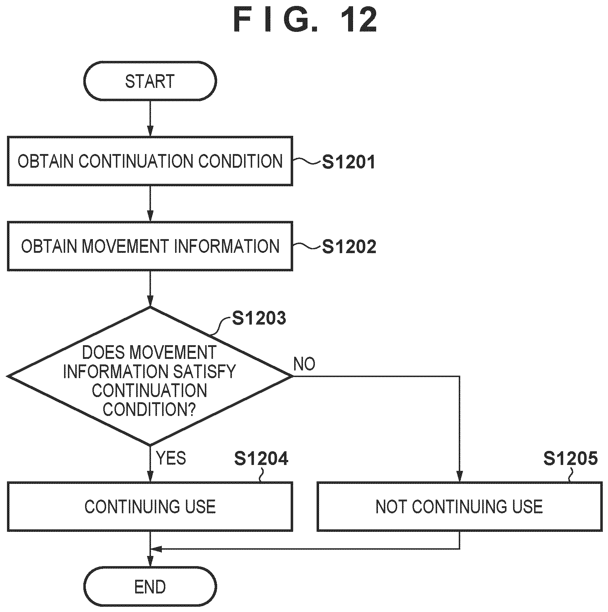

The following describes details of the processing performed in step S503 according to the present embodiment with reference to the flowchart shown in FIG. 12. In step S1201, the continuous use determination unit 403 obtains the condition for determining that the user P is continuing the use of the camera. Here, an example is described in which the condition for determining that the user P is continuing the use of the camera 100 is that it is determined that the camera 100 is continuously moving based on a criteria described later.

In step S1202, the movement obtaining unit 1101 obtains an acceleration rate and an angular speed of the camera 100 as movement information from the inertial sensor 310. The movement information obtained each time step S1202 is executed is stored as a history in the memory.

In step S1203, whether or not the movement information obtained in step S1202 satisfies the condition obtained in step S1201 is determined. The continuous use determination unit 403 determines whether the camera 100 is moving or standing still at present based on the history of movement information obtained in step S1202. More specifically, if the amount of change in the obtained acceleration rate within the latest certain period is equal to or larger than a threshold determined in advance or the latest angular speed is equal to or higher than a threshold determined in advance, it is determined that the camera 100 is moving at present.

If it is determined that the camera 100 is moving, the processing proceeds to step S1204 and it is determined that the user P is "continuing the use of the camera", and the flow ends. On the other hand, if it is determined that the camera 100 is standing still, the processing proceeds to step S1205 and it is determined that the user P is "not continuing the use of the camera", and the flow ends.

With this configuration, it is possible to detect shaking of the camera 100 while the user is holding the camera 100 with his hand, for example, and to determine that the use of the camera is being continued. On the other hand, when the user has placed the camera 100 on a desk or the like and removed his hand from the camera, the camera 100 stands still, and accordingly, it is possible to determine that the user is not continuing the use of the camera 100.

In the method according to the present embodiment, while the camera 100 is continuously moving, it is determined that the use of the camera by the same user is continuing and authentication of the user is maintained, and therefore, the convenience of the device is improved. In the present embodiment, the acceleration rate and the angular speed of the camera 100 are obtained as the movement information from the inertial sensor 310, but the method for obtaining movement information is not limited to this example. For example, a configuration is also possible in which images captured by the camera 100 are successively obtained, and movement of the camera 100 is estimated by performing optical flow analysis, which is a known technique. Alternatively, it is also possible to use a differential value of positional information obtained by the position measuring unit such as a GPS device.

In the present embodiment, the condition for determining the continuous use of the camera 100 by the user P is that the camera is continuously moving, but the condition for making the determination based on movement information is not limited to this example. For example, it is also possible to determine that the user P is continuously using the camera 100 while the camera 100 is standing still, assuming that the camera 100 is fixed to a tripod or the like to take images intermittently. Alternatively, it is also possible to add a condition for determining that the user P ceased the continuous use of the camera 100 in response to detection of a specific movement pattern, e.g., in response to the user rapidly shaking the camera 100 twice. Alternatively, it is also possible to set a condition for determining that the user P is continuously using the camera 100 while the camera 100 is moving following a pattern registered in advance, as in programmed image capturing performed with use of an automated pan head. These conditions may be selected or combined in advance based on an operation made by the user.

<Variation>

In the sixth embodiment, whether or not the user is continuously using the camera 100 is determined based on a condition set in advance, but in this variation, the condition is determined based on movement information of the time at which the user is identified.

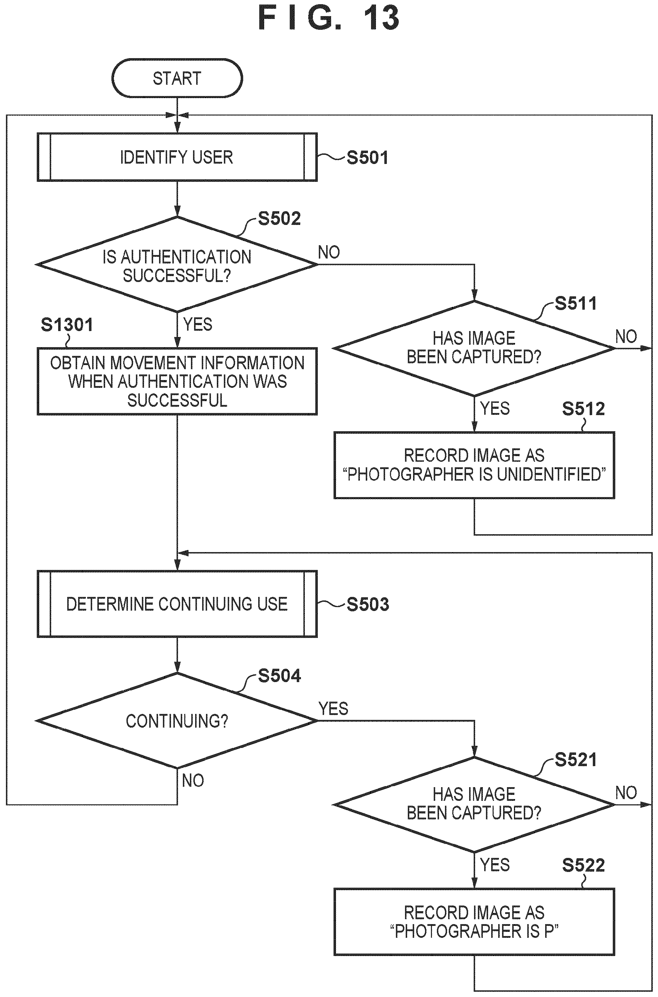

The appearance of the camera shown in FIGS. 1A, 1B, and 1C, the configuration of the camera shown in FIG. 2, the electrical configuration of the camera shown in FIG. 3, and the functional configuration of the camera shown in FIG. 11 are the same as those in the sixth embodiment, and therefore, descriptions thereof are omitted. The following describes, with reference to the flowchart shown in FIG. 13, a procedure of processing that the camera 100 according to the present embodiment performs to determine the state of continuous use by the user. The steps from step S501 to step S522 are the same as those in the first embodiment, and therefore, descriptions thereof are omitted. Other than matter described below, details of the processing performed in step S503 are the same as those shown in FIG. 12 described in the sixth embodiment, and therefore, descriptions thereof are omitted.

In step S1301, the movement obtaining unit 1101 obtains movement information at the timing at which it is determined that the authentication was successful in the processing performed in step S502. Here, the movement obtaining unit 1101 obtains information regarding continuous movement during a certain period of time. Thereafter, the continuous use determination unit 403 determines whether the camera 100 was moving or standing still at the time when the user was successfully authenticated based on the movement information using the same criteria as that used in step S1203.

In step S1201, the continuous use determination unit 403 sets a condition for determining that the user P is continuing the use of the camera 100 according to the movement of the camera 100 at the time when the user was successfully authenticated, which has been determined in step S1301. More specifically, if the camera 100 was moving at the time when the user was successfully authenticated, a condition that the camera 100 is continuing moving is set as the condition for determining that the user P is continuously using the camera 100. If the camera 100 was standing still at the time when the user was successfully authenticated, a condition that the camera 100 is continuing standing still is set as the condition for determining that the user P is continuously using the camera 100.

In this case, even if the user P does not actively set the determination condition, the determination condition can be automatically set by the continuous use determination unit 403, and authentication of the user is maintained under a condition corresponding to the condition of use of the camera 100, and therefore, the convenience of the device is improved.

(Seventh Embodiment)

In a seventh embodiment, a method will be described in which an information device, such as a smartphone, carried by the user of the camera 100 is paired with the camera 100, and if the position of the camera 100 is within a predetermined distance from the position of the information device, it is determined that the user is continuously using the camera. By maintaining the state where the user is authenticated when the position of the user and the position of the camera 100 are close to each other, it is possible to reduce the frequency of authentication. As a result, the convenience of the device is improved.

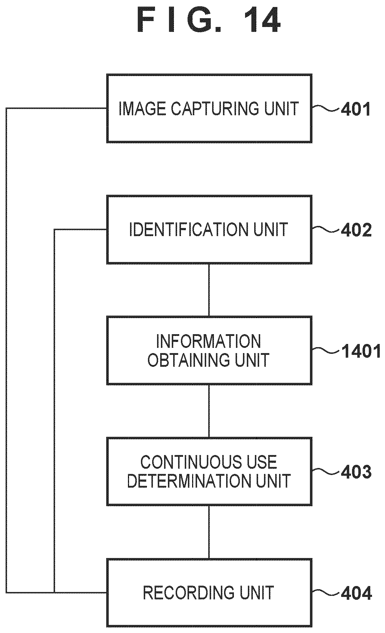

A functional configuration example of the camera 100 relating to processing described below is shown in the block diagram of FIG. 14. The functional blocks include the image capturing unit 401, the identification unit 402, an information obtaining unit 1401, the continuous use determination unit 403, and the recording unit 404. The image capturing unit 401, the identification unit 402, and the recording unit 404 are the same as those in the first embodiment, and therefore, descriptions thereof are omitted.

The information obtaining unit 1401 obtains GPS positional information of the camera 100 and GPS positional information of an information device that is held by the user and paired with the camera 100 from the GPS receiving unit 308. The continuous use determination unit 403 sets the position of the information device obtained by the information obtaining unit 1401 as a reference position, and determines whether or not the user is continuously using the camera 100 based on the reference position and the position of the camera 100.

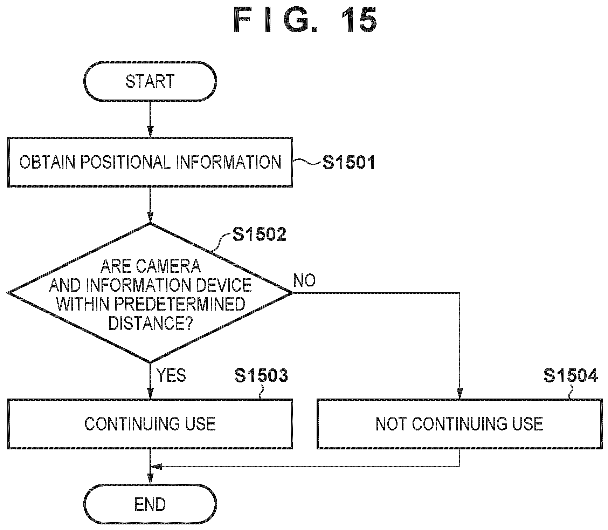

The following describes a procedure of processing that the camera 100 according to the present embodiment performs to determine the state of continuous use by the user. The steps from step S501 to step S522 shown in FIG. 5 are the same as those in the first embodiment, and therefore, descriptions thereof are omitted. The following describes a procedure for determining that the user P is continuing the use of the camera in step S503 with reference to the flowchart shown in FIG. 15.

First, in step S1501, the information obtaining unit 1401 obtains positions of the camera 100 and the information device. The positional information of the camera 100 and the information device is GPS positional information obtained by the information obtaining unit 1401.

In step S1502, the continuous use determination unit 403 determines whether or not the distance between the camera 100 and a reference position, which is the position of the information device, is equal to or shorter than a predetermined distance. If the distance is equal to or shorter than the predetermined distance, the processing proceeds to step S1503 and it is determined that the user P is "continuing the use of the camera", and the flow ends. If the distance is longer than the predetermined distance, the processing proceeds to step S 1504 and it is determined that the user P is "not continuing the use of the camera", and the flow ends.

In the method according to the present embodiment, when the information device held by the user and the camera 100 are close to each other, it is determined that the user is continuing the use of the camera, and accordingly, authentication of the user is maintained while a series of images are captured, and therefore, the convenience of the device is improved.

(Variation 1 of Seventh Embodiment)

Next, the following describes variation 1 of the seventh embodiment. In the seventh embodiment, it is determined that the camera 100 and the information device held by the user are close to each other based on GPS positional information of the camera and the information device, but in this variation, the determination is made based on whether or not communication can be performed between the camera 100 and the information device. If short-range communication such as Bluetooth is used for the communication between the camera 100 and the information device, it is possible to determine whether or not the camera 100 and the information device are close to each other based on whether or not the communication can be performed.

The functional units of the camera 100 shown in FIG. 14 are the same as those in the seventh embodiment. In this variation, the information obtaining unit 1401 shown in FIG. 14 obtains information indicating whether or not communication can be performed between the camera 100 and the information device that is held by the user and paired with the camera 100 from the communication unit 307.

The continuous use determination unit 403 determines whether or not the user is continuously using the camera 100 based on the information obtained by the information obtaining unit 1401 indicating whether or not communication can be performed between the camera 100 and the information device.

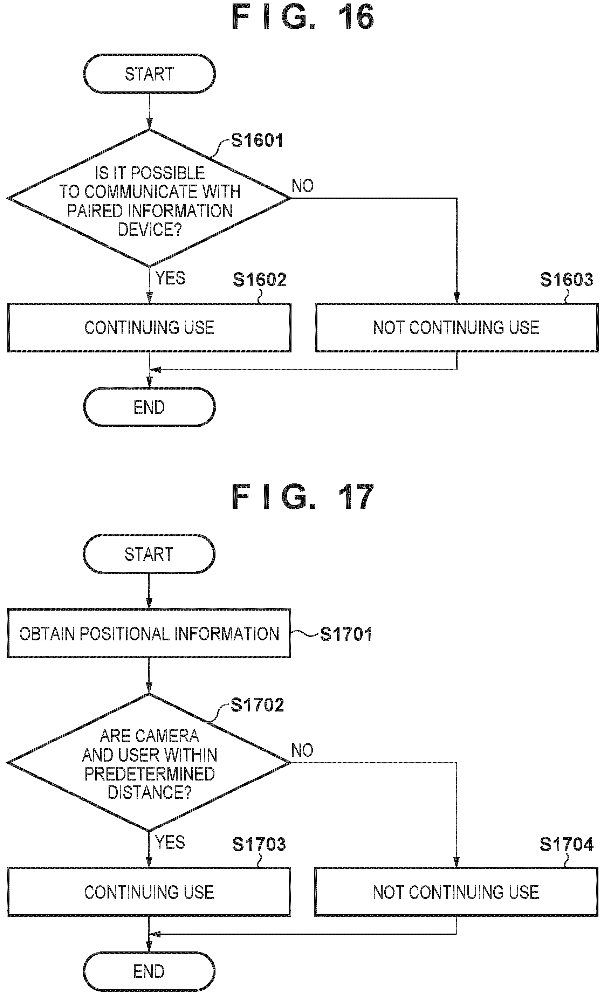

The procedure of processing that the camera 100 according to the present embodiment performs to determine the continuous use by the user is the same as that in the first embodiment shown in the flowchart of FIG. 5. This flow starts when the information device held by the user is paired with the camera 100 to enable communication therebetween. The following describes a procedure for determining that the user P is continuing the use of the camera in step S503 shown in FIG. 5 with reference to the flowchart shown in FIG. 16.

First, in step S1601, whether or not communication can be performed between the camera 100 and the paired information device is determined. If the communication can be performed, the processing proceeds to step S1602 and it is determined that the user P is "continuing the use of the camera", and the flow ends. If the communication cannot be performed, the processing proceeds to step S1603 and it is determined that the user P is "not continuing the use of the camera", and the flow ends.

In the method according to this variation, even if absolute positions of the information device and the camera 100 cannot be measured, authentication of the user is maintained while a series of images are captured, and therefore, the convenience of the device is improved.

(Variation 2 of Seventh Embodiment)

Next, the following describes variation 2 of the seventh embodiment. In the variation 1 of the seventh embodiment, closeness between the camera 100 and the user is determined based on whether or not communication can be performed between the camera 100 and the information device held by the user. In this variation, the distance between the camera 100 and the user is measured with use of a distance sensor included in the camera 100 to make the determination. Examples of the distance sensor include an ultrasonic sensor, LiDAR, etc., but other sensors may also be used.

The distance sensor that is directly connected to the CPU is added to the electrical configuration of the camera 100 shown in FIG. 3. In this variation, the information obtaining unit 1401 shown in FIG. 14 obtains distance information output by the distance sensor of the camera 100. The continuous use determination unit 403 determines whether or not the user is continuously using the camera 100 based on the distance information obtained by the information obtaining unit 1401.

The procedure of processing that the camera 100 according to the present embodiment performs to determine the continuous use by the user is the same as that in the first embodiment shown in the flowchart of FIG. 5. This flow starts when the distance sensor is enabled to measure the distance. At the start of this flow, a "predetermined distance" that is necessary for the continuous use determination unit 403 to make the determination has already been recorded in the memory 213 of the camera 100. The following describes a procedure for determining that the user P is continuing the use of the camera in step S503 shown in FIG. 5 with reference to the flowchart shown in FIG. 17.

First, in step S1701, the distance between the camera 100 and the user, which is output by the distance sensor, is obtained as positional information. In step S1702, whether or not the distance between the user and the camera 100 is equal to or shorter than the predetermined distance is determined. If the distance is equal to or shorter than the predetermined distance, the processing proceeds to step S1703 and it is determined that the user P is "continuing the use of the camera", and the flow ends. On the other hand, if the distance is longer than the predetermined distance, the processing proceeds to step S1704 and it is determined that the user P is "not continuing the use of the camera", and the flow ends.

In this variation, the distance between the camera 100 and the user is measured with use of the distance sensor included in the camera, but other methods may also be used. It is possible to provide a camera for detecting the face of the user on the rear surface of the camera 100 and make the determination based on a distance between the camera 100 and the user estimated from the size of the face of the user, or it is also possible to determine that the camera 100 and the user are close to each other while the face of the user can be detected.

In the method according to this variation, the distance between the camera 100 and the user can be measured with use of only the camera 100 and authentication of the user is maintained while a series of images are captured, and therefore, the convenience of the device is improved.

(Variation 3 of Seventh Embodiment)

Next, the following describes variation 3 of the seventh embodiment. In the variation 2 of the seventh embodiment, the distance between the camera 100 and the user is measured with use of the distance sensor included in the camera, but in this variation, the distance is measured with use of an external sensor such as a monitoring camera.

The measurement is performed with use of a monitoring camera by determining coordinates in a real space corresponding to the position of a target object detected in a captured image with use of a parameter for conversion between coordinates in the real space and camera coordinates, which is determined in advance through camera calibration. Note that the monitoring camera has a communication function and is capable of transmitting information of the measured distance to the camera.

The functional configuration of the camera 100 shown in FIG. 14 is the same as that in the seventh embodiment. In this variation, the information obtaining unit 1401 shown in FIG. 14 obtains positional information of the camera 100 and the user through communication between the communication unit 307 and the monitoring camera.

The continuous use determination unit 403 sets the position of the user obtained by the information obtaining unit 1401 as a reference position, and determines whether or not the user is continuously using the camera 100 based on the reference position and the current position of the camera 100.

The procedure of processing that the camera 100 according to the present embodiment performs to determine the continuous use by the user is the same as that in the first embodiment shown in the flowchart of FIG. 5. This flow starts when the camera 100 is enabled to communicate with the monitoring camera. At the start of this flow, a "predetermined distance" that is necessary for the continuous use determination unit 403 to make the determination has already been recorded in the memory 213 of the camera 100. The procedure for determining that the user P is continuing the use of the camera in step S503 shown in FIG. 5 can be shown by the flowchart of FIG. 17 as in the variation 2 of the seventh embodiment. In this variation, the positions of the camera 100 and the user obtained from the monitoring camera are the positional information in step S1701.

In this variation, a method in which the positions of the camera 100 and the user are determined based on an image captured by the monitoring camera is described as an example of a method for determining the positions of the camera and the user on a common coordinate system. However, the method for determining the positions of the camera 100 and the user is not limited to this example. There is also a method for determining the distance between the camera 100 and the user by preparing a transmitter such as an optical beacon transmitter, determining the positions of the camera 100 and the user from signals received by receivers fixed to the camera 100 and the user, and calculating the distance based on the positions.

In the method according to this variation, even if the camera 100 is not provided with a configuration for measuring positions, authentication of the user is maintained while a series of images are captured, and therefore, the convenience of the device is improved.

(Eighth Embodiment)

Next, the following describes an eighth embodiment. In the seventh embodiment, the continuous use of the camera 100 by the user of the camera 100 is determined based on the fact that the camera 100 and the information device held by the user are close to each other. In the present embodiment, the continuous use of the camera 100 by the user of the camera 100 is determined based on the fact that the position of the camera is close to a reference position that is the position of the camera at the time at which the user is identified. With this method, it is possible to reduce the frequency of authentication if a change in an image capturing position is limited while a series of images are captured. As a result, the convenience of the device is improved. Note that the position of the camera is determined based on GPS positional information as in the seventh embodiment.

The functional units of the camera 100 shown in FIG. 14 are the same as those in the seventh embodiment. In the present embodiment, the information obtaining unit 1401 shown in FIG. 14 obtains GPS positional information of the camera 100 from the GPS receiving unit 308.

The continuous use determination unit 403 sets the position of the camera 100 obtained by the information obtaining unit 1401 when the user is identified by the user identification unit 402, as a reference position, and determines whether or not the user is continuously using the camera 100 based on the reference position and the current position of the camera 100.

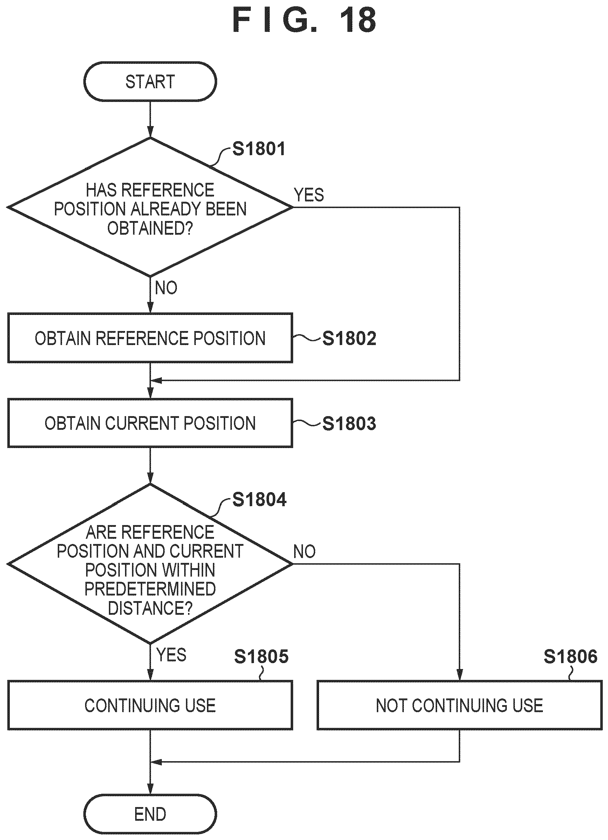

The procedure of processing that the camera 100 according to the present embodiment performs to determine the continuous use by the user is the same as that in the first embodiment shown in the flowchart of FIG. 5. At the start of this flow, a "predetermined distance" that is necessary for the continuous use determination unit 403 to make the determination has already been recorded in the memory 213 of the camera 100. This flow is started when the power source of the camera 100 is turned on, and is repeated until it becomes no longer possible to continue the processing due to the power source of the camera 100 being turned off, for example. The following describes a procedure for determining that the user P is

continuing the use of the camera in step S503 shown in FIG. 5 with reference to the flowchart shown in FIG. 18.

First, in step S1801, whether or not the position of the camera 100 at the timing at which the user was identified by the user identification unit 402 has already been obtained is determined. If the position has already been obtained, the processing proceeds to step S1803, and if the position has not been obtained, the processing proceeds to step S1802 and the position of the camera 100 is obtained and set as the reference position. In step S1803, the current position of the camera 100 is obtained.

In step S1804, whether or not a distance between the reference position and the current position is equal to or shorter than the predetermined distance is determined. If the distance is equal to or shorter than the predetermined distance, the processing proceeds to step S1805 and it is determined that the user P is "continuing the use of the camera", and the flow ends. On the other hand, if the distance is longer than the predetermined distance, the processing proceeds to step S1806 and it is determined that the user P is "not continuing the use of the camera", and the flow ends.

In the method according to the present embodiment, authentication of the user is maintained while a series of images are captured, without the position of an object other than the device being measured, and therefore, the convenience of the device is improved.

(Variation 1 of Eighth Embodiment)

Next, the following describes variation 1 of the eighth embodiment. In the eighth embodiment, the position at the time at which the user is identified is used as the reference position, but in this variation, a position at the start of image capturing is used as a reference position. If there is a time lag between the time at which the user is identified by the user identification unit 402 and the start of image capturing, the use of the camera by the user is continued with a method according to a ninth embodiment described below, for example.

The functional units of the camera 100 shown in FIG. 14 are the same as those in the seventh embodiment. The continuous use determination unit 403 sets the position of the camera 100 obtained by the information obtaining unit 1401 at the time when image capturing is started by the image capturing unit 401, as the reference position, and determines whether or not the user is continuously using the camera 100 based on the reference position and the current position of the camera 100.

The procedure of processing that the camera 100 according to the present embodiment performs to determine the continuous use by the user is the same as that in the first embodiment shown in the flowchart of FIG. 5. This flow is started when the power source of the camera 100 is turned on, and is repeated until it becomes no longer possible to continue the processing due to the power source of the camera 100 being turned off, for example. At the start of this flow, a "predetermined distance" that is necessary for the continuous use determination unit 403 to make the determination has already been recorded in the memory 213 of the camera 100.

The procedure for determining that the user P is continuing the use of the camera in step S503 shown in FIG. 5 can be shown by the flowchart of FIG. 18 as in the eighth embodiment. The reference position in this flow is the position at the start of image capturing.

In the method according to this variation, even if the camera 100 moves during the period from when the user is identified to when image capturing is started, authentication of the user is maintained while a series of images are captured, and therefore, the convenience of the device is improved.

(Variation 2 of Eighth Embodiment)

Next, the following describes variation 2 of the eighth embodiment. In the eighth embodiment and the variation 1, the position at the time at which the user is identified or the position at the start of image capturing is used as the reference position, but in this variation, a position designated by the user on a map having the same coordinate system as the coordinate system in which the current position of the camera 100 is output is set as a reference position. Note that the map used to designate the reference position may be a map held by the camera 100 or a map held by an information device that can communicate with the camera 100.

The functional units of the camera 100 shown in FIG. 14 are the same as those in the seventh embodiment. The continuous use determination unit 403 includes a reference position setting unit, which is not shown in FIG. 14, and determines whether or not the user is continuously using the camera 100 based on the reference position and the current position of the camera 100.

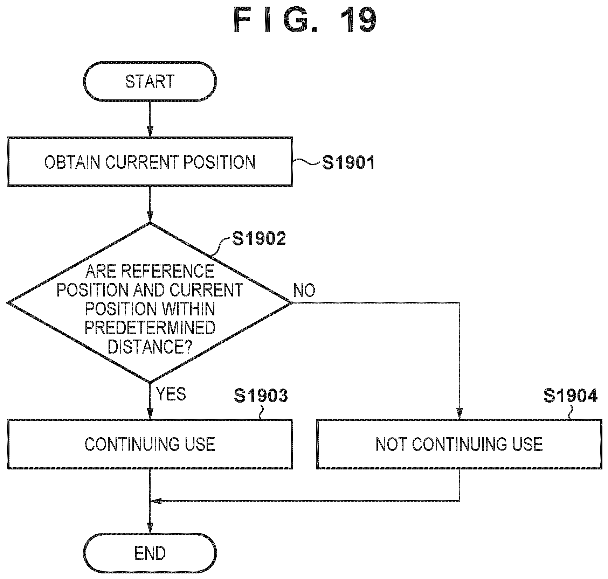

The procedure of processing that the camera 100 according to the present embodiment performs to determine the continuous use by the user is the same as that in the first embodiment shown in the flowchart of FIG. 5. At the start of this flow, the reference position and a "predetermined distance" have already been recorded in the memory 213 of the camera 100. The following describes a procedure for determining that the user P is continuing the use of the camera in step S503 shown in FIG. 5 with reference to the flowchart shown in FIG. 19.

First, in step S1901, the current position of the camera 100 is obtained. Next, in step S1902, whether or not a distance between the reference position and the current position is equal to or shorter than the predetermined distance is determined. If the distance is equal to or shorter than the predetermined distance, the processing proceeds to step S 1903 and it is determined that the user P is "continuing the use of the camera", and the flow ends. On the other hand, if the distance is longer than the predetermined distance, the processing proceeds to step S1904 and it is determined that the user P is "not continuing the use of the camera", and the flow ends.

In the method according to this variation, if the user takes images at a specific location, authentication of the user is maintained while the series of images are captured, and therefore, the convenience of the device is improved.

(Variation 3 of Eighth Embodiment)

Next, the following describes variation 3 of the eighth embodiment. In the variation 2 of the eighth embodiment, a position designated by the user on a map having the same coordinate system as the coordinate system in which the current position of the camera 100 is output is used as the reference position, a predetermined range from the reference position is set as a reference region, and the determination of the continuous use is made effective if the current position is within the reference region. In this variation, a region designated by the user on the same map is set as the reference region. The reference region may be designated on a map held by the camera 100 or a map held by an information device that can communicate with the camera 100.

The functional units of the camera 100 shown in FIG. 14 are the same as those in the seventh embodiment. The continuous use determination unit 403 includes a reference region setting unit, which is not shown in FIG. 14, and determines whether or not the user is continuously using the camera 100 based on the reference region and the current position of the camera 100.

The procedure of processing that the camera 100 according to the present embodiment performs to determine the continuous use by the user is the same as that in the first embodiment shown in the flowchart of FIG. 5. At the start of this flow, the reference region that is used to determine the continuous use by the user has already been recorded in the memory 213 of the camera 100. The procedure for determining that the user P is continuing the use of the camera in step S503 shown in FIG. 5 can be shown by the flowchart of FIG. 19 as in the variation 1 of the eighth embodiment. In this variation, whether or not the current position of the camera 100 is within the reference region is determined in step S 1902.

In the method according to this variation, if the user takes images within a specific region, authentication of the user is maintained while the series of images are captured, and therefore, the convenience of the device is improved.

(Ninth Embodiment)

Next, the following describes a ninth embodiment. In the seventh and eighth embodiments, the continuous use is determined based on positional information of the camera 100, but in the present embodiment, the continuous use is determined based on time information. The time at which the user is identified is set as a reference time, and if the current time is within a predetermined period from the reference time, it is determined that the user is continuously using the camera. With this method, it is possible to reduce the frequency of authentication. As a result, the convenience of the device is improved.

The functional units of the camera 100 shown in FIG. 14 are the same as those in the seventh embodiment. In the present embodiment, the information obtaining unit 1401 shown in FIG. 14 obtains the current time of the camera 100 from the timer 309.

The continuous use determination unit 403 sets the time obtained by the information obtaining unit 1401 when the user was identified by the user identification unit 402, as the reference time, and determines whether or not the user is continuously using the camera 100 based on the reference time and the current time of the camera 100.

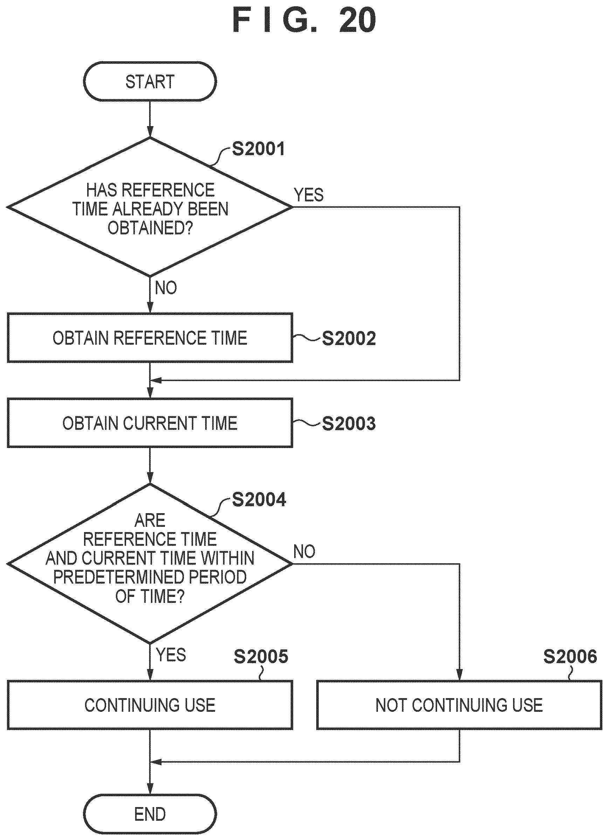

The procedure of processing that the camera 100 according to the present embodiment performs to determine the continuous use by the user is the same as that in the first embodiment shown in the flowchart of FIG. 5. At the start of this flow, the "predetermined period" that is necessary for the continuous use determination unit 403 to make the determination has already been recorded in the memory 213 of the camera 100. This flow is started when the power source of the camera 100 is turned on, and is repeated until it becomes no longer possible to continue the processing due to the power source of the camera 100 being turned off, for example. The following describes a procedure for determining that the user P is continuing the use of the camera in step S503 shown in FIG. 5 with reference to the flowchart shown in FIG. 20.

First, in step S2001, whether or not the time of the camera 100 at the timing at which the user was identified by the user identification unit 402 has already been obtained is determined. If the time has already been obtained, the processing proceeds to step S2003, and if the time has not been obtained, the processing proceeds to step S2002 and the current time of the camera 100 is obtained and set as the reference time. In step S2003, the current time of the camera 100 is obtained.

In step S2004, whether or not a period between the reference time and the current time is equal to or shorter than the predetermined period is determined. If the period is equal to or shorter than the predetermined period, the processing proceeds to step S2005 and it is determined that the user P is "continuing the use of the camera", and the flow ends. On the other hand, if the period is longer than the predetermined period, the processing proceeds to step S2006 and it is determined that the user P is "not continuing the use of the camera", and the flow ends.

In the method according to the present embodiment, if a series of images are captured within a limited period, authentication of the user is maintained while the series of images are captured, and therefore, the convenience of the device is improved.

(Variation 1 of Ninth Embodiment)

Next, the following describes variation 1 of the ninth embodiment. In the ninth embodiment, the time at which the user is identified is used as the reference time, but in this variation, the time at which image capturing is started is used as a reference time. If there is a time lag between the time at which the user is identified by the user identification unit 402 and the start of image capturing, the use of the camera by the user is continued with the method according to the eighth embodiment described above, for example.

The functional units of the camera 100 shown in FIG. 14 are the same as those in the seventh embodiment, and therefore, descriptions thereof are omitted. In the present embodiment, the information obtaining unit 1401 shown in FIG. 14 obtains the current time of the camera 100 from the timer 309.

The continuous use determination unit 403 sets the time obtained by the information obtaining unit 1401 when image capturing is started by the image capturing unit 401, as the reference time, and determines whether or not the user is continuously using the camera 100 based on the reference time and the current time of the camera 100.

The procedure of processing that the camera 100 according to the present embodiment performs to determine the continuous use by the user is the same as that in the first embodiment shown in the flowchart of FIG. 5. At the start of this flow, a "predetermined period" that is necessary for the continuous use determination unit 403 to make the determination has already been recorded in the memory 213 of the camera 100. The procedure for determining that the user P is continuing the use of the camera in step S503 shown in FIG. 5 can be shown by the flowchart of FIG. 20 as in the ninth embodiment. The reference time in this flow is the time at which image capturing is started.

In the method according to this variation, even if the camera 100 moves during the period from when the user is identified to when image capturing is started, authentication of the user is maintained while a series of images are captured, and therefore, the convenience of the device is improved.

(Variation 2 of Ninth Embodiment)

Next, the following describes variation 2 of the ninth embodiment. In the ninth embodiment, if the current time is within the predetermined period from the reference time, it is determined that the user is continuously using the camera, but in the present embodiment, if the current time is not later than an end time set in the camera 100 by the user, it is determined that the user is continuing the use of the camera.

The functional units of the camera 100 shown in FIG. 14 are the same as those in the seventh embodiment. In the present embodiment, the information obtaining unit 1401 shown in FIG. 14 obtains the current time of the camera 100 from the timer 309.

The continuous use determination unit 403 includes a reference time setting unit, which is not shown in FIG. 14, and determines whether or not the user is continuously using the camera 100 based on the reference time and the current time of the camera 100. Here, the reference time is the time at which image capturing is scheduled to end.

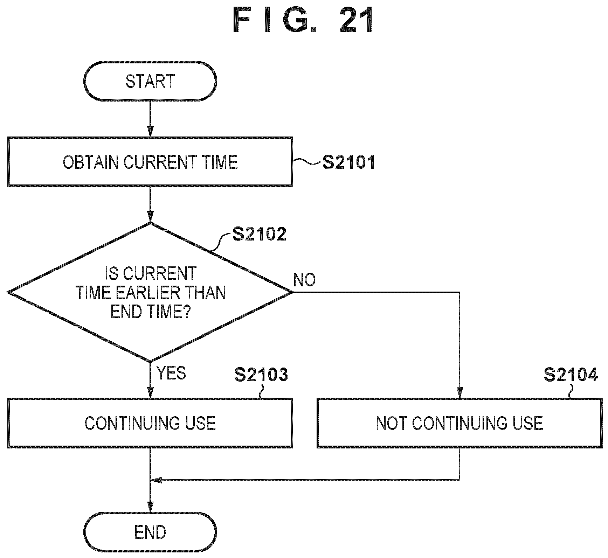

The procedure of processing that the camera 100 according to the present embodiment performs to determine the continuous use by the user is the same as that in the first embodiment shown in the flowchart of FIG. 5. At the start of this flow, the end time has already been recorded in the memory 213 of the camera 100. The following describes a procedure for determining that the user P is continuing the use of the camera in step S503 shown in FIG. 5 with reference to the flowchart shown in FIG. 21.

First, in step S2101, the current time of the camera 100 is obtained. Next, in step S2102, whether or not the current time is the reference time (scheduled end time) or earlier than the reference time is determined. If the current time is the end time or earlier than the end time, the processing proceeds to step S2103 and it is determined that the user P is "continuing the use of the camera", and the flow ends. On the other hand, if the current time is later than the reference time (scheduled end time), the processing proceeds to step S2104 and it is determined that the user P is "not continuing the use of the camera", and the flow ends.

In the method according to this variation, if the time at which capturing of a series of images will end is known, authentication of the user is maintained while the series of images are captured, and therefore, the convenience of the device is improved.

(Tenth Embodiment)

Next, the following describes a tenth embodiment. The continuous use is determined based on positional information of the camera 100 in the seventh and eighth embodiments, and based on time information of the camera 100 in the ninth embodiment, but in the present embodiment, the continuous use is determined based on both positional information and time information.

The functional units of the camera 100 shown in FIG. 14 are the same as those in the seventh embodiment. In the present embodiment, the information obtaining unit 1401 shown in FIG. 14 obtains GPS positional information of the camera 100 from the GPS receiving unit 308 and obtains time information from the timer 309.

The continuous use determination unit 403 sets a position obtained by the information obtaining unit 1401 when the user is identified by the user identification unit 402, as a reference position. Furthermore, the continuous use determination unit 403 sets a time obtained by the information obtaining unit 1401 when the user is identified by the user identification unit 402, as a reference time. Whether or not the user is continuously using the camera 100 is determined based on the reference position, the current position of the camera 100, the reference time, and the current time of the camera 100.

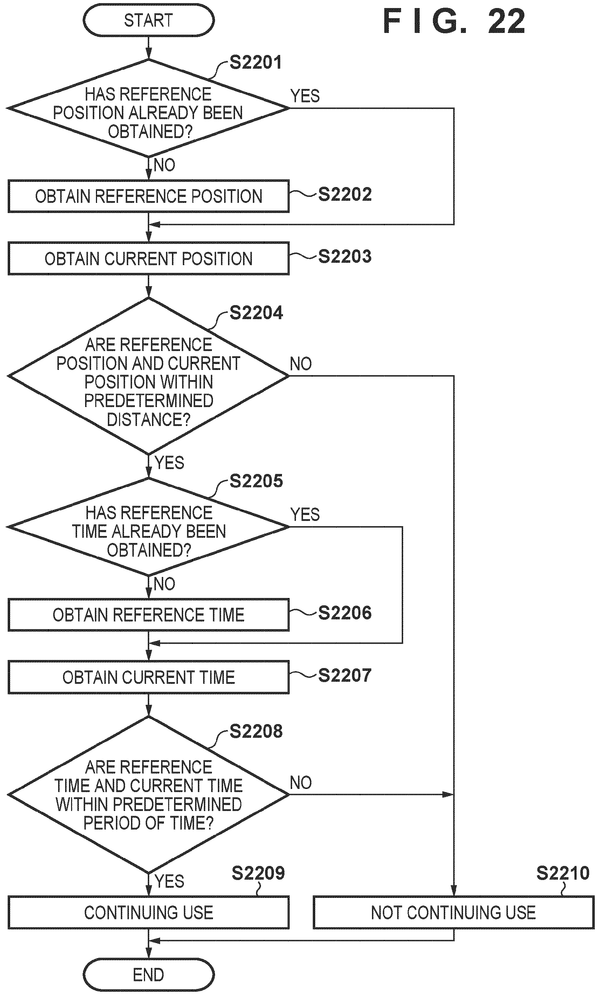

The procedure of processing that the camera 100 according to the present embodiment performs to determine the continuous use by the user is the same as that in the first embodiment shown in the flowchart of FIG. 5. At the start of this flow, a "predetermined distance" and a "predetermined period" that are necessary for the continuous use determination unit 403 to make the determination have already been recorded in the memory 213 of the camera 100. This flow is started when the power source of the camera 100 is turned on, and is repeated until it becomes no longer possible to continue the processing due to the power source of the camera 100 being turned off, for example. The following describes a procedure for determining that the user P is continuing the use of the camera in step S503 shown in FIG. 5 with reference to the flowchart shown in FIG. 22.

First, in step S2201, whether or not the position of the camera 100 at the timing at which the user was identified by the user identification unit 402 has already been obtained is determined. If the position has already been obtained, the processing proceeds to step S2203, and if the position has not been obtained, the processing proceeds to step S2202 and the position of the camera 100 is obtained and set as the reference position.

In step S2203, the current position of the camera 100 is obtained. In step S2204, whether or not a distance between the reference position and the current position is equal to or shorter than the predetermined distance is determined. If the distance is equal to or shorter than the predetermined distance, the processing proceeds to step S2205. If the distance is longer than the predetermined distance, the processing proceeds to step S2210 and it is determined that the user P is "not continuing the use of the camera", and the flow ends.

In step S2205, whether or not the time of the camera 100 at the timing at which the user was identified by the user identification unit 402 has already been obtained is determined. If the time has already been obtained, the processing proceeds to step S2207, and if the time has not been obtained, the processing proceeds to step S2206 and the time of the camera 100 is obtained and set as the reference time.

In step S2207, the current time of the camera 100 is obtained. In step S2208, whether or not a period between the reference time and the current time is equal to or shorter than the predetermined period is determined. If the period is equal to or shorter than the predetermined period, the processing proceeds to step S2209 and it is determined that the user P is "continuing the use of the camera", and the flow ends. On the other hand, if the period is longer than the predetermined period, the processing proceeds to step S2210 and it is determined that the user P is "not continuing the use of the camera", and the flow ends.

In the method according to the present embodiment, even if it is not possible to predict which of the position of the camera 100 and the time for image capturing will be limited, authentication of the user is maintained while a series of images are captured, and therefore, the convenience of the device is improved.

(Eleventh Embodiment)

In the present embodiment, an example will be described in which the continuous use is determined with use of captured images. More specifically, the user of the camera, i.e., the photographer, at the time of image capturing is identified with use of a degree of similarity between images. The degree of similarity between images in the present embodiment is an index that indicates whether or not the images themselves are similar to each other, and is also influenced by the times at which the images are captured and conditions under which the images are captured. The degree of similarity between images is used mainly for the following two reasons. First, it is thought that intended subjects of images taken by a photographer at the same time are basically identical with each other in many cases irrespective of whether or not the authentication is successful. Second, even if the subjects of the images are different from each other, it is thought that, when the same user takes images of similar scenes, the user uses similar settings and intends to create similar images.

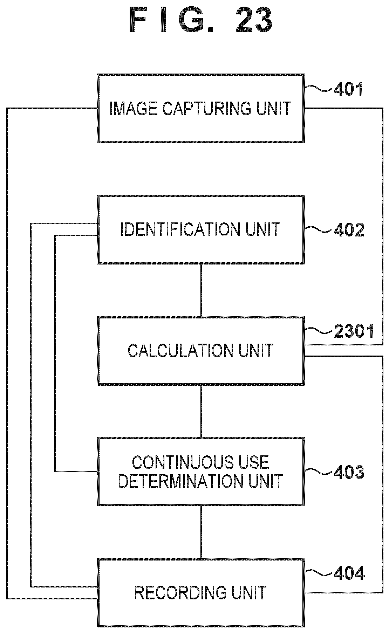

A functional configuration example of the camera 100 relating to processing described below is shown in the block diagram of FIG. 23. The camera 100 includes the image capturing unit 401, the identification unit 402, a calculation unit 2301, the continuous use determination unit 403, and the recording unit 404, and these units function when the CPU 212 electrically controls the units of the camera 100.

If the user identification unit 402 has failed to identify the user, the calculation unit 2301 calculates degrees of similarity between an image captured by the image capturing unit 401 and one or more images that have been associated with photographer information among images recorded in the recording unit 404. If the user identification unit 402 has successfully identified the user, the calculation unit 2301 calculates degrees of similarity between the image captured by the image capturing unit 401 and one or more images that have not been associated with photographer information among the images recorded in the recording unit 404.

If any of the degrees of similarity calculated by the calculation unit 2301 is higher than a predetermined threshold determined in advance, the continuous use determination unit 403 determines that the two or more images used for the calculation of the degree of similarity were taken by the same photographer.

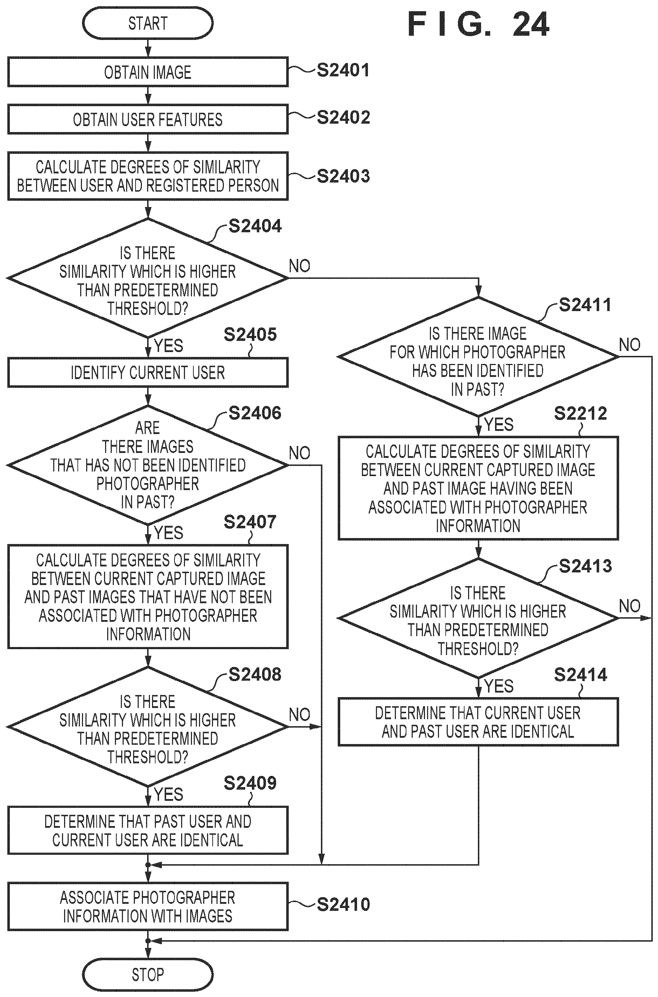

The following describes, with reference to the flowchart shown in FIG. 24, a procedure of processing from when the camera 100 according to the present embodiment starts image capturing to when photographer information is associated with images. In step S2401, the image capturing unit 401 obtains an image by converting a captured image signal received from the imaging element 211 to image information.

In step S2402, the user identification unit 402 obtains features of the eyeball 220 of the user whose image was captured by the eye imaging element 219. More specifically, the features are extracted from an eye image (eye image signal; electrical signal of the eye image) obtained from the eye imaging element 219 via the line-of-sight detection circuit 301. A neural network is used for the feature extraction. For example, a convolutional neural network (CNN), which is a type of neural networks, is used. In the CNN, abstracted information is extracted from an input image by repeatedly performing processing including convolution processing, activation processing, and pooling processing on the input image many times. At this time, a processing unit constituted by the convolution processing, the activation processing, and the pooling processing is often called a layer. There are many known methods used as the activation processing, and it is possible to use, for example, a method called Rectified Linear Unit (ReLU). Also, there are many known methods used as the pooling processing, and it is possible to use, for example, a method called Max pooling. For example, it is possible to use ResNet introduced by, for example, Non-Patent Document (K. He, X. Zhang, S. Ren, and J. Sun. Identity mappings in deep residual networks. In ECCV, 2016) as the structure of the CNN. It is also possible to use a neural network known as Vision Transformer (ViT) described in Non-Patent Document (Alexey Dosovitskiy, et al. An image is worth 16x16 words: Transformers for image recognition at scale. In ICLR, 2021.). The structure of the neural network is not limited to these examples. Note that information such as the structure and a weight of the neural network is held by the memory 213. The weight of the neural network that is used is obtained in advance through learning. For example, eye images of various persons are obtained in advance for the learning, and the learning is performed with a method such as ArcFace described in Non-Patent Document (J. Deng, J. Guo, N. Xue, and S. Zafeiriou. Arcface: Additive angular margin loss for deep face recognition. In CVPR, 2019).

Although a method that uses a neural network is described as an example of the method for authenticating a person with use of an eye image, it is also possible to use a known method (e.g., Japanese Patent No. 3307936) that is known as iris recognition, for example. The method for authenticating a person is not limited to these examples.

In step S2403, the user identification unit 402 compares the features obtained in step S2402 and features of each user, i.e., each registered person, which are recorded in advance in the memory 213, and determines degrees of similarity. In the present embodiment, the degrees of similarity (i.e., cosine similarity) are calculated by normalizing the features and calculating inner products, but it is also possible to use other methods. For example, it is also possible to use a neural network trained to calculate a degree of similarity from input features, pattern matching, frequency analysis, Euclidean distance, Manhattan distance, or the like, and there is no limitation to a specific method. If features are not successfully obtained in step S2402, the degrees of similarity are not calculated in this step.

In step S2404, the user identification unit 402 determines whether or not any of the degrees of similarity calculated in step S2403 is higher than a predetermined threshold determined in advance. If any of the degrees of similarity is higher than the threshold, the processing proceeds to step S2405, otherwise, the processing proceeds to step S2411.

In step S2405, the continuous use determination unit 403 determines that the user who took the image obtained by the image capturing unit 401 in step S2401 is identical with a registered person corresponding to the highest degree of similarity.

In step S2406, the recording unit 404 confirms whether or not images recorded in the memory 213 include one or more images that have not been associated with photographer information. If the images include such an image, the processing proceeds to step S2407, otherwise, the processing proceeds to step S2410.

In step S2407, the calculation unit 2301 calculates degrees of similarity between the image obtained by the image capturing unit 401 in step S2401 and one or more images confirmed by the recording unit 404 in step S2406 as images that were obtained in the past by the image capturing unit 401 and have not been associated with photographer information.

Here, features are extracted from each image, and the degrees of similarity are calculated with a method similar to the method used in step S2403. A known neural network is used to extract features from each image, and features regarding subjects themselves are obtained. If the subjects themselves are similar to each other, the features are close to each other, otherwise, the features are far from each other. Although features regarding the subjects themselves are obtained in this example, it is also possible to obtain features regarding orientations, arrangement, or motions of the subjects, or compositions or background information of the images. It is also possible to use a combination of these features. Also, a method that uses a neural network is described as an example of the method for extracting features, but it is also possible to use a known feature extraction method such as HoG or SIFT. Also, a method that uses feature extraction performed with use of a neural network and inner products is described as an example of the method for calculating the degree of similarity between images, but it is also possible to use a method that uses squared errors of pixel values or Kullback-Leibler divergence of a pixel value histogram, for example. Additionally, it is also possible to adjust the calculated degree of similarity with use of metadata that is added when each image is captured, such as the time at which the image was captured, the place where the image was captured, the shutter speed, the ISO speed, the aperture value, the focal length, lens specifications, etc., (e.g., if a difference between times at which respective images were taken is large, the degree of similarity between the images may be made lower than the degree of similarity of a case where the difference is small). Alternatively, it is also possible to calculate the degree of similarity based on only these types of metadata (e.g., if a difference between times at which respective images were taken is 1 second, the degree of similarity may be determined as 0.99, and if the difference is 10 seconds, the degree of similarity may be determined as 0.8). It is sufficient to calculate the degree of similarity with use of a function f expressed by the following mathematical formula 1 by taking information obtained from the images and conditions under which the images are captured comprehensively into account such that the degree of similarity is inversely proportional to a difference between the images themselves or metadata of the respective images.

$$\text{(Mathematical Formula 1)}$$

$$\text{Degree of similarity (between images)} = f(I_1, I_2)$$

Here, $I_1$ represents information obtained from an image whose photographer has not been identified (information that can be extracted from pixels (information obtained through image recognition (the subject itself, the orientation of the subject, motion of the subject, the composition, background information, and features thereof), pixel values, histogram) or metadata added to the image (the time at which the image was captured, the place where the image was captured, the shutter speed, the ISO speed, the aperture value, the focal length, lens specifications)), and $I_2$ represents information obtained from N (N≥1) images whose photographers have been identified. The function f may be obtained by manually determining the weight of each explanatory variable or by performing learning with a known machine learning method such as a neural network or random forest. Although the degree of similarity is calculated with use of the single function in the mathematical formula 1, it is also possible to use a plurality of similar functions in combination. The degree of similarity may be in any form and may be calculated with any method as long as it is possible to determine whether or not two images were captured by the same user based on the degree of similarity. The present embodiment does not limit the method for extracting features and the method for calculating the degree of similarity between images.

In step S2409, the continuous use determination unit 403 determines that the user who took all images for which it was determined in step S2408 that the degree of similarity is higher than the threshold is identical with the user who took the image obtained by the image capturing unit 401 in step S2401.

In step S2410, the recording unit 407 associates photographer information with each image for which the user was newly identified in step S2405, S2409, or S2414 in such a manner that the photographer information cannot be falsified, and then ends the processing. As a method for associating the photographer information in such a manner that the photographer information cannot be falsified, a method that is known as C2PA described in Non-Patent Document (Coalition for Content Provenance and Authenticity (C2PA), "C2PA Specifications", <Technical Specifications Version 1.2>, [online], November 3rd, 2022 [searched on January 23th, 2023], Internet <URL: https://c2pa.org/specifications/specifications/1.2/specs/C2PA_Specification.html> ) is used. C2PA is a method for adding, to an image, metadata indicating contents of editing performed on the image to authenticate the source of the image, a course of events, or a history of the image. Therefore, photographer information may also be recorded in accordance with C2PA. However, it is also possible to record the photographer information with use of other methods. Alternatively, the image and the photographer information may also be recorded in different files. Alternatively, the photographer information may also be managed in a database. The method for recording the photographer information is not limited to these methods.

In step S2411, the recording unit 404 confirms whether or not images recorded in the memory 213 include one or more images that have already been associated with photographer information. If the images include such an image, the processing proceeds to step S2412, otherwise, the processing ends (information indicating that the photographer has not been identified is associated with the image as necessary).

In step S2412, the calculation unit 2301 calculates degrees of similarity between the image obtained by the image capturing unit 401 in step S2401 and N (N≥1) images confirmed by the recording unit 404 in step S2411 as images that have already been associated with photographer information. The method described regarding step S2407 is used to calculate the degrees of similarity.

In step S2413, the continuous use determination unit 403 determines whether or not any of the degrees of similarity calculated by the calculation unit 2301 in step S2412 is higher than a predetermined threshold determined in advance. If any of the degrees of similarity is higher than the threshold, the processing proceeds to step S2414, otherwise, the processing ends (information indicating that the photographer has not been identified is associated with the image as necessary).

In step S2414, the continuous use determination unit 403 determines that the photographer who took an image corresponding to the highest degree of similarity among images for which it was determined in step S2413 that the degree of similarity is higher than the threshold is identical with the photographer who took the image obtained by the image capturing unit 401 in step S2401.

According to the configuration described above, even if it was not possible to obtain information suitable for authentication of the photographer, such as an image of an eye looking in through the finder because the user's attention was directed to image capturing rather than authentication at the time when the user took an image (e.g., a perfect opportunity suddenly came while the user was taking images of a sport or wild birds), it is possible to identify the photographer, i.e., associate information of the photographer with the captured image, and the convenience of the device that authenticates and records the photographer is improved.

(Variation 1 of Eleventh Embodiment)

In the above example, the image capturing unit 401 obtains an image by converting a captured image signal received from the imaging element 211 to image information. However, it is also possible to obtain moving picture rather than an image. In this case, the calculation unit 2301 may calculate degrees of similarity with use of specific frames extracted from the moving picture or all frames of the moving picture, and take an average thereof as the final degree of similarity.

(Variation 2 of Eleventh Embodiment)

In the above example, the recording unit 404 associates photographer information with an image for which it is determined by the continuous use determination unit 403 that the photographer is identical with the photographer of another image in such a manner that the photographer information cannot be falsified. However, it is also possible to associate photographer information with an image other than such an image. More specifically, it is also possible to determine that an image captured between two images for which it is determined that the photographer is identical was also captured by the same photographer, and associate information of the same photographer with that image.

(Variation 3 of Eleventh Embodiment)

In the above embodiment, the user identification unit 402 obtains features of the eyeball 220 of the user. However, it is also possible to obtain features from something other than the eyeball 220. For example, a configuration is also possible in which another camera is installed on the camera 100 (e.g., above the operation member 103), and features are extracted from an image of the face of the user obtained with use of this camera. Alternatively, features may also be extracted from an iris image extracted from an eye image of the user. Alternatively, a configuration is also possible in which a microphone is installed on the camera 100 (e.g., above the operation member 103), and features are extracted from voiceprint information of the user obtained with use of this microphone. Alternatively, a configuration is also possible in which a fingerprint sensor is installed on the camera 100 (e.g., on the release button 101 or the operation member 103), and features are extracted from fingerprint information of the user obtained with use of this sensor. Alternatively, a configuration is also possible in which a vein sensor is installed on the camera 100 (on the release button 101), and features are extracted from vein information of the user obtained with use of this sensor. Alternatively, a configuration is also possible in which features are extracted from moving picture showing motions of the eyeball 220 of the user captured chronologically by the eye imaging element 219. Alternatively, a configuration is also possible in which features are extracted from information of an operation specific to the user, which is obtained via the operation member 103, 104, or 105.

(Variation 4 of Eleventh Embodiment)

In the above example, the user identification unit 402 determines the degree of similarity with use of features, and identifies the user. However, it is also possible to identify the user without using features and the degree of similarity. For example, it is also possible to identify the user by letting the user enter a password, a PIN code, or the like. Alternatively, a configuration is also possible in which the camera 100 is configured to be capable of being paired with a smartphone through Bluetooth connection or the like, and when the Bluetooth connection is established, a result of personal authentication performed by the smartphone is shared with the camera 100. It is also possible to identify the user with use of a system such as FIDO authentication.

(Variation 5 of Eleventh Embodiment)

In the above example, the user identification unit 402 identifies the user at the time of image capturing. However, it is also possible to identify the user in two steps, i.e., at a time when the camera is not being used for image capturing and the time of image capturing. An advantage of the two-step identification is that, if a registered person who is likely to take an image is extracted in advance from a plurality of registered persons based on strict conditions at the time when the camera is not being used for image capturing, it is sufficient to merely determine whether or not the user is identical with the registered person under relatively loose conditions at the time of image capturing, and accordingly, it is possible to increase the accuracy of the identification performed at the time of image capturing. Also, the user is compared with the single registered person at the time of image capturing, and accordingly, it is possible to reduce processing time (because the processing time is the sum of the time it takes to perform biometric authentication and the time it takes to calculate the degree of similarity between images).

(Variation 6 of Eleventh Embodiment)

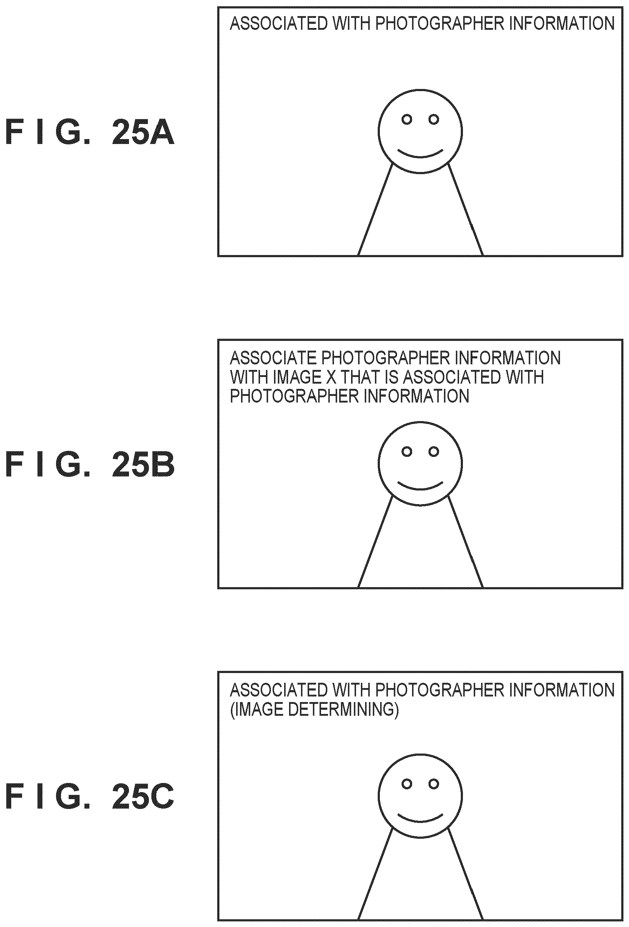

In the above example, there is no way for the user to notice that photographer information is associated with an image by the recording unit 404 at the time of image capturing. In this regard, it is also possible to provide the camera 100 with a configuration for notifying the user that photographer information is associated with the image at the time of image capturing. More specifically, it is also possible to display indications like those shown in FIGS. 25A, 25B, and 25C on the display panel of the eyepiece 102. FIGS. 25A, 25B, and 25C show the followings.
FIG. 25A: display example of a case where the photographer of the current image is identified based on an eye image, but photographers of past images are not identified based on degrees of similarity between the images.
FIG. 25B: display example of a case where the photographer of the current image is identified based on an eye image, and the photographer of a past image is also identified based on the degree of similarity between the images.
FIG. 25C: display example of a case where the photographer of the current image is identified based on the degree of similarity between images.
These correspond to the following cases in the processing flow described above.
FIG. 25A: Yes in step S2404, but No in step S2406 or S2408.
FIG. 25B: Yes in all of steps S2404, S2406, and S2408.
FIG. 25C: No in step S2404, but Yes in steps S2411 and S2413.
With this configuration, the user can notice that photographer information is associated with the image at the time of image capturing, and this improves the efficiency of image capturing. However, this is merely an example, and it is also possible to give the notification to the user with use of other methods. For example, a configuration is also possible in which indications similar to those shown in FIGS. 25A, 25B, and 25C are displayed on the operation member 103. Alternatively, a configuration is also possible in which a speaker is provided at a suitable position on the camera 100 (e.g., above the operation member 103), and audio corresponding to the state of association is output from the speaker at the time when photographer information is associated with an image. Alternatively, a configuration is also possible in which the camera 100 is configured to be capable of being paired with an external device such as a smartphone or a smartwatch through Bluetooth connection or the like, and the external device gives a notification corresponding to the state of association at the timing at which photographer information is associated with an image.

(Twelfth Embodiment)

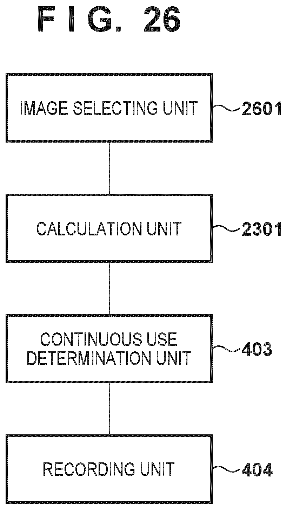

In the eleventh embodiment, a method is described in which the user is identified at the time of image capturing with use of the degree of similarity between images. However, there are cases where it is desired to identify the user with use of the degree of similarity between images after image capturing has ended. Examples of such cases include a case where it is necessary to shift to capturing of other images immediately after image capturing has ended, and a case where images recorded in the memory 213 are transferred to a memory of an external information processing device via a portable media such as an SD card after image capturing. In the present embodiment, a method is described in which the user is identified in such cases with use of the degree of similarity between images.
A functional configuration example of the camera 100 (or another information processing device) relating to processing described below is shown in the block diagram of FIG. 26. The camera 100 includes an image selecting unit 2601, the calculation unit 2301, the continuous use determination unit 403, and the recording unit 404, and these units function when the CPU 212 electrically controls the units of the camera 100.

The image selecting unit 2601 selects one or more images that have already been associated with photographer information and one or more images that have not been associated with photographer information from among images recorded in the memory 213. The calculation unit 2301 calculates degrees of similarity between the images that have been associated with photographer information and the images that have not been associated with photographer information, which have been selected by the image selecting unit 2601.

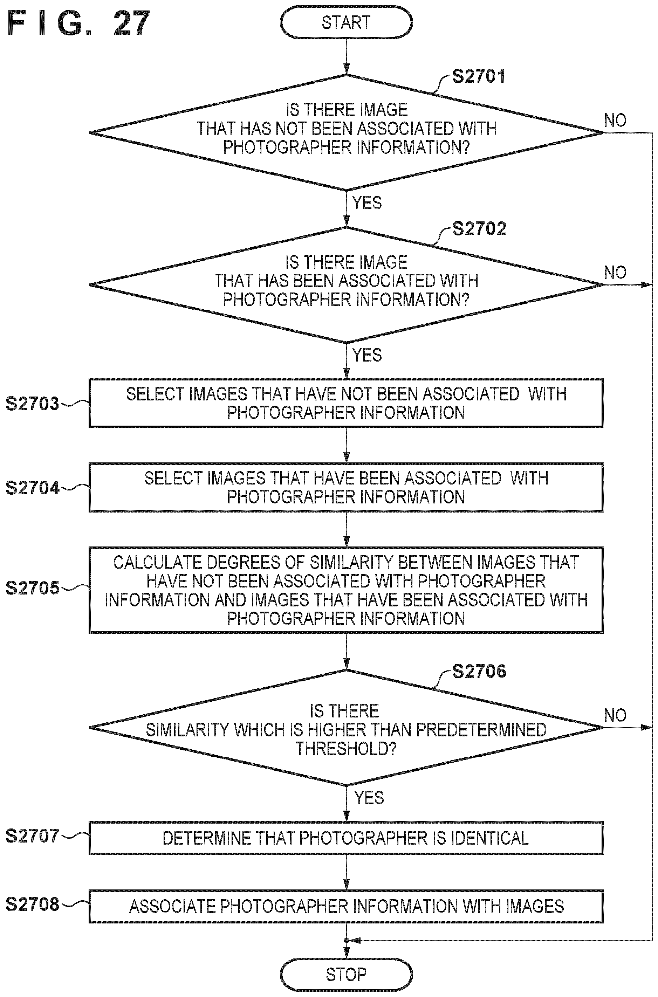

The following describes, with reference to the flowchart shown in FIG. 27, a procedure of processing that the camera 100 (or the other information processing device) according to the present embodiment performs to associate photographer information with images.

In step S2701, the image selecting unit 2601 confirms whether or not images recorded in the memory 213 include one or more images that have not been associated with photographer information. If the images include such an image, the processing proceeds to step S2702, otherwise, the processing ends.

In step S2702, the image selecting unit 2601 confirms whether or not the images recorded in the memory 213 include one or more images that have already been associated with photographer information. If the images include such an image, the processing proceeds to step S2703, otherwise, the processing ends.

In step S2703, the image selecting unit 2601 selects M (M≥1) images whose photographer is to be identified from the images confirmed in step S2701 as images that have not been associated with photographer information, based on input information obtained from the operation member 103, 104, or 105.

In step S2704, the image selecting unit 2601 selects N (N≥1) images whose photographer is identical from the images confirmed in step S2702 as images that have been associated with photographer information, based on input information obtained from the operation member 103, 104, or 105.

In step S2705, the calculation unit 2301 calculates degrees of similarity between the M images selected by the image selecting unit 2601 in step S2703 and the N images selected by the image selecting unit 2601 in step S2704. The method described regarding step S2407 is sequentially applied to the M images (repeated M times) to calculate the degrees of similarity.

In step S2706, the continuous use determination unit 403 determines whether or not any of the M degrees of similarity calculated by the calculation unit 2301 in step S2705 is higher than a predetermined threshold determined in advance. If any of the degrees of similarity is higher than the threshold, the processing proceeds to step S2707, otherwise, the processing ends.

In step S2707, the continuous use determination unit 403 determines that the photographer of all images that have not been associated with photographer information and correspond to X (X≤M) degrees of similarity that were determined to be higher than the threshold in step S2706 is identical with the photographer of the N images.

In step S2708, the recording unit 404 associates photographer information with the images whose photographer has been newly identified in step S2707 in such a manner that the photographer information cannot be falsified, and then ends the processing.

The configuration described above makes it possible to associate photographer information with an image (authenticate the photographer) even when the camera is not being used for image capturing, and the convenience of the device that authenticates and records the photographer is improved.

The numerical values, processing timings, processing orders, subjects of the processing, configurations of data (information), methods for obtaining data, transmission destinations and transmission origins of data, storing locations of data, etc., described in the above embodiments and variations are examples given to specifically describe the present invention, and are not intended to limit the present invention to those examples.

The above embodiments and variations may be partially or entirely combined with each other as appropriate. Also, some or all aspects of the above embodiments and variations may be selectively used.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro

**EP 4 642 042 A2**

processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An imaging device **characterized by** comprising:

   identification means for identifying a user of the imaging device;
   determination means for determining a state of continuous use of the imaging device by the user; and
   control means for performing control such that information of the user is recorded in a memory in association with an image captured by the imaging device between a time at which the user is identified by the identification means and a time at which it is determined by the determination means that use of the imaging device by the user is not continuing.

2. The imaging device according to claim 1,
   **characterized in that** the memory is included in the imaging device or connected to the imaging device in a physically detachable manner.

3. The imaging device according to claim 1,

   **characterized in that** the imaging device is connected to a server including the memory via a communication path, and
   the control means transmits a signal to the server in accordance with a result of the determination so that the image and the information of the user are recorded in association with each other in the memory.

4. The imaging device according to claim 1,
   **characterized in that** the identification means identifies the user of the imaging device based on biometric information of the user of the imaging device.

5. The imaging device according to claim 4,
   **characterized in that** the biometric information includes information of at least one of an iris, a fingerprint, a vein, and a face.

6. The imaging device according to claim 1,
   **characterized in that** the identification means identifies the user of the imaging device based on authentication information that is input by the user of the imaging device or read from a recording medium.

7. The imaging device according to claim 1,
   **characterized in that** the determination means determines that the use of the imaging device by the user is continuing during a period from when the user is identified by the identification means to when an instruction to end the imaging device is given.

8. The imaging device according to claim 1,
   **characterized in that**, if it is determined that the user is holding a grip of the imaging device, the determination means determines that the use of the imaging device by the user is continuing.

9. The imaging device according to claim 1,
   **characterized in that**, if it is determined that orientation of the imaging device is changing, the determination means determines that the use of the imaging device by the user is continuing.

**10.** The imaging device according to claim 1,
**characterized in that**, if movement of the imaging device is detected, the determination means determines that the use of the imaging device by the user is continuing.

**11.** The imaging device according to claim 1,
**characterized in that**, if the imaging device is located within a specific geographical range, the determination means determines that the use of the imaging device by the user is continuing.

**12.** The imaging device according to claim 1,
**characterized in that**, if the identification means has failed to identify the user of the imaging device, the control means performs control such that an image captured by the imaging device is recorded in the memory in association with information indicating that the user of the imaging device has not been identified.

**13.** The imaging device according to claim 1, **characterized by** further comprising:

movement obtaining means for obtaining movement information of the imaging device,
**characterized in that** the determination means determines the state of continuous use of the imaging device by the user based on the movement information obtained by the movement obtaining means.

**14.** The imaging device according to claim 13,
**characterized in that** the movement obtaining means obtains the movement information based on a value output from an acceleration sensor and/or an angular speed sensor.

**15.** The imaging device according to claim 13,
**characterized in that** the determination means determines, as a period during which the user is continuously using the imaging device, a period during which the imaging device is moving in the same manner as movement of the imaging device at the time at which the user is identified by the identification means, the period including the time at which the user is identified by the identification means.

**16.** The imaging device according to claim 1, **characterized by** further comprising:

obtaining means for obtaining either one of or both of information indicating a position of the imaging device and information indicating time,
**characterized in that** the determination means determines whether or not the user is continuously using the imaging device based on the information obtained by the obtaining means.

**17.** The imaging device according to claim 16, **characterized by** further comprising:

position setting means for setting a reference position,
**characterized in that** the determination means determines whether or not the user is continuously using the imaging device based on a distance between the position of the imaging device obtained by the obtaining means and the reference position set by the position setting means.

**18.** The imaging device according to claim 1, **characterized by** further comprising:

image similarity calculation means for calculating a degree of similarity between pieces of information obtained from images,
**characterized in that**, if the identification means has failed to identify the user, the determination means determines the state of continuous use of the imaging device by the user based on a result of calculation by the image similarity calculation means regarding an image that has not been associated with photographer information and an image that has been associated with photographer information.

**19.** The imaging device according to claim 18,
**characterized in that** the image similarity calculation means uses any of or a combination of information extracted from pixels and metadata added to the images as the pieces of information obtained from the images.

**20.** The imaging device according to claim 18,
**characterized in that** the image similarity calculation means calculates a degree of similarity between pieces of information obtained from some or all frames of moving picture captured by the imaging device.

21. The imaging device according to claim 1, **characterized by** further comprising:
notification means for notifying the user that photographer information is associated with an image when the photographer information is associated with the image by the control means.

22. A method for controlling an imaging device, the method **characterized by** comprising:

identifying a user of the imaging device;
determining a state of continuous use of the imaging device by the user; and
performing control such that information of the user is recorded in a memory in association with an image captured by the imaging device between a time at which the user is identified in the identification and a time at which it is determined in the determination that use of the imaging device by the user is not continuing.

# F I G. 1A

# F I G. 1B

# F I G. 1C

# FIG. 2

Y-AXIS
DIRECTION

Z-AXIS
DIRECTION

X-AXIS
DIRECTION

# FIG. 3

# FIG. 4

IMAGE CAPTURING UNIT ~401

USER IDENTIFICATION UNIT ~402

CONTINUOUS USE DETERMINATION UNIT ~403

RECORDING UNIT ~404

# FIG. 5

```
        ( START )
            │
            ▼
    ┌───────────────────┐
    │   IDENTIFY USER   │── S501
    └───────────────────┘
            │
            ▼
         S502
       ◇─────────◇
      ╱ IS AUTHEN- ╲       NO
     ╱  TICATION    ╲──────────────┐
     ╲ SUCCESSFUL? ╱               │
      ╲───────────╱                ▼
           │ YES               S511
           │              ◇──────────◇
           │             ╱ HAS IMAGE  ╲    NO
           │            ╱ BEEN         ╲──────────►
           │            ╲ CAPTURED?    ╱
           │             ╲────────────╱
           │                  │ YES    S512
           │                  ▼
           │       ┌──────────────────────────┐
           │       │    RECORD IMAGE AS        │
           │       │ "PHOTOGRAPHER IS          │
           │       │   UNIDENTIFIED"           │
           │       └──────────────────────────┘
           │                  │
           ▼◄─────────────────┘
    ┌───────────────────────┐
    │ DETERMINE CONTINUING  │── S503
    │        USE            │
    └───────────────────────┘
            │
            ▼
         S504
       ◇─────────◇       YES
      ╱ CONTINUING? ╲──────────────┐
      ╲───────────╱                │
           │ NO                    ▼
           │                   S521
           │              ◇──────────◇
           │             ╱ HAS IMAGE  ╲    NO
           │            ╱ BEEN         ╲──────────►
           │            ╲ CAPTURED?    ╱
           │             ╲────────────╱
           │                  │ YES    S522
           │                  ▼
           │       ┌──────────────────────────┐
           │       │    RECORD IMAGE AS        │
           │       │ "PHOTOGRAPHER IS P"       │
           │       └──────────────────────────┘
```

# F I G. 6

```
                    ┌──────────────┐
                    │    START     │
                    └──────────────┘
                           │
                           ▼        S601
                       ╱ HAS  ╲
                      ╱  END BUTTON BEEN ╲    YES
                      ╲  INDICATED?      ╱ ──────────┐
                       ╲      ╱                      │
                         │ NO                        │
                         ▼        S602               │
                       ╱ HAS  ╲                      │
                      ╱  MODE BEEN ╲    YES          │
                      ╲  CHANGED?  ╱ ────────────────┤
                       ╲      ╱                      │
                         │ NO                        │
                         ▼  S604              S605   │
              ┌────────────────────┐  ┌──────────────────────┐
              │   CONTINUING USE   │  │  NOT CONTINUING USE  │
              └────────────────────┘  └──────────────────────┘
                         │                        │
                         ▼────────────◄───────────┘
                    ┌──────────────┐
                    │     END      │
                    └──────────────┘
```

# F I G. 7

START

S701
HAS
LENS BEEN
REMOVED? — YES

NO

S702
IS INPUT TRULY
DARK TO IMAGING
ELEMENT? — YES

NO

S703
IS EXTERNAL
CONNECTION CUT
OFF? — YES

NO

S604
CONTINUING USE

S605
NOT CONTINUING USE

END

EP 4 642 042 A2

# F I G. 8

34

# FIG. 9A

903           901

| IMAGE CAPTURING MODE |
| VIEWING MODE |
| SETTING |

AUTHENTICATING·P[01:23]

END ~902

IMAGES CAPTURED ~904
5/100 SHEETS

~900

# FIG. 9B

903           901

| IMAGE CAPTURING MODE |
| VIEWING MODE |
| SETTING |

IS NOT AUTHENTICATED

~900

# FIG. 9C

903           901

| IMAGE CAPTURING MODE |
| VIEWING MODE |
| SETTING |

ENDED AUTHENTICATING P
LENS WAS REMOVED

~900

# FIG. 10

| IMAGE CAPTURING MODE |
| --- |
| VIEWING MODE |
| SETTING |

| IMAGE QUALITY |
| --- |
| SHUTTER |
| POWER SOURCE |
| ... |
| METHOD FOR MAINTAINING AUTHENTICATION |

MAINTAINING AUTHENTICATION OPTIONS

| | | |
| --- | --- | --- |
| AUTHENTICATION END BUTTON | DISPLAY | NON-DISPLAY |
| END AUTHENTICATION UPON MODE SWITCH | ON | OFF |
| END WHEN LENS REMOVED | ON | OFF |
| END WHEN LENS COVER DETECTED | ON | OFF |
| END WHEN EXTERNAL CONNECTION IS CUT OFF | ON | OFF |
| CONTINUE DURING CONSECUTIVE IMAGE CAPTURING | ON | OFF |
| CONTINUE WHILE GRIP | ON | OFF |
| CONTINUE WHILE FIXED TO TRIPOD | ON | OFF |
| CONTINUE WHILE ANGLE OF VIEW IS SAME | ON | OFF |
| 100   SHEETS CAPTURED -> END | ON | OFF |

EP 4 642 042 A2

# F I G. 11

```
┌─────────────────────────┐
│  IMAGE CAPTURING UNIT    │ ~401
└─────────────────────────┘

┌─────────────────────────┐
│   IDENTIFICATION UNIT    │ ~402
└─────────────────────────┘

┌─────────────────────────┐
│       MOVEMENT          │ ~1101
│    OBTAINING UNIT       │
└─────────────────────────┘

┌─────────────────────────┐
│    CONTINUOUS USE       │ ~403
│  DETERMINATION UNIT     │
└─────────────────────────┘

┌─────────────────────────┐
│     RECORDING UNIT      │ ~404
└─────────────────────────┘
```

# F I G.  12

```
           ┌─────────┐
           │  START  │
           └─────────┘
                │
                ▼
   ┌──────────────────────────────┐
   │ OBTAIN CONTINUATION CONDITION │──── S1201
   └──────────────────────────────┘
                │
                ▼
   ┌──────────────────────────────┐
   │  OBTAIN MOVEMENT INFORMATION  │──── S1202
   └──────────────────────────────┘
                │
                ▼
                                 S1203
            ◇ DOES MOVEMENT
              INFORMATION SATISFY        NO
              CONTINUATION ◇──────────────────┐
              CONDITION?                        │
                │ YES    S1204                   │          S1205
                ▼                                 ▼
   ┌──────────────────────┐          ┌──────────────────────┐
   │    CONTINUING USE    │          │   NOT CONTINUING USE  │
   └──────────────────────┘          └──────────────────────┘
                │                                 │
                ▼◄────────────────────────────────┘
           ┌─────────┐
           │   END   │
           └─────────┘
```

# F I G. 13

```
                    ( START )
                        |
  ┌─────────────────────┼──────────────────────────────────────────────┐
  │         ┌─────────────────────────┐                                  │
  │         │      IDENTIFY USER      │──S501                            │
  │         └─────────────────────────┘                                  │
  │                     |                                                 │
  │                   S502                                                │
  │              ◇ IS AUTHENTICATION ◇── NO ──┐                          │
  │                SUCCESSFUL?                  |                          │
  │                     |                       ▼                          │
  │  S1301            YES                     S511                         │
  │  ┌─────────────────────────┐       ◇ HAS IMAGE ◇── NO ──────────────▶│
  │  │ OBTAIN MOVEMENT INFORMATION│      BEEN CAPTURED?                    │
  │  │ WHEN AUTHENTICATION WAS  │            |                            │
  │  │      SUCCESSFUL          │           YES        S512               │
  │  └─────────────────────────┘            |                            │
  │            |                   ┌─────────────────────────┐           │
  │            |                   │     RECORD IMAGE AS     │           │
  │            |                   │ "PHOTOGRAPHER IS UNIDENTIFIED" │     │
  │            |                   └─────────────────────────┘           │
  │            |                             |                            │
  │            ◀─────────────────────────────┘                            │
  │         ┌─────────────────────────┐                                  │
  │         │ DETERMINE CONTINUING USE │──S503                           │
  │         └─────────────────────────┘                                  │
  │                     |                                                 │
  │                   S504                                                │
  │              ◇ CONTINUING? ◇── YES ──┐                               │
  │                     |                  |                               │
  │                    NO                  ▼                               │
  │                     |                S521                             │
  │                     |          ◇ HAS IMAGE ◇── NO ──────────────────▶│
  │                     |           BEEN CAPTURED?                        │
  │                     |                |                                │
  │                     |               YES        S522                   │
  │                     |                |                                │
  │                     |       ┌─────────────────────────┐              │
  │                     |       │     RECORD IMAGE AS     │              │
  │                     |       │   "PHOTOGRAPHER IS P"   │              │
  │                     |       └─────────────────────────┘              │
  │                     |                 |                               │
  └─────────────────────┴─────────────────┘                             │
```

# F I G.  14

```
┌──────────────────────────┐
│   IMAGE CAPTURING UNIT    │───401
└──────────────────────────┘

┌──────────────────────────┐
│    IDENTIFICATION UNIT    │───402
└──────────────────────────┘

┌──────────────────────────┐
│       INFORMATION         │───1401
│     OBTAINING UNIT        │
└──────────────────────────┘

┌──────────────────────────┐
│     CONTINUOUS USE        │───403
│   DETERMINATION UNIT      │
└──────────────────────────┘

┌──────────────────────────┐
│      RECORDING UNIT       │───404
└──────────────────────────┘
```

# F I G. 15

```
        ┌──────────────┐
        │    START     │
        └──────┬───────┘
               │
               ▼
┌─────────────────────────────┐
│ OBTAIN POSITIONAL INFORMATION │──S1501
└──────────────┬──────────────┘
               │
               ▼           S1502
           ╱───────────╲
          ╱  ARE CAMERA  ╲
         ╱ AND INFORMATION ╲    NO
        ⟨  DEVICE WITHIN    ⟩──────────┐
         ╲  PREDETERMINED  ╱           │
          ╲   DISTANCE?   ╱            │
           ╲─────────────╱             │
               │ YES    S1503          │  S1504
               ▼                       ▼
    ┌──────────────────┐   ┌──────────────────────┐
    │  CONTINUING USE  │   │  NOT CONTINUING USE  │
    └────────┬─────────┘   └──────────┬───────────┘
             │◄───────────────────────┘
             ▼
        ┌─────────┐
        │   END   │
        └─────────┘
```

# FIG. 16

START

↓

S1601

IS IT POSSIBLE TO COMMUNICATE WITH PAIRED INFORMATION DEVICE?

NO →

YES ↓

**S1602**

CONTINUING USE

**S1603**

NOT CONTINUING USE

↓

END

# FIG. 17

START

↓

OBTAIN POSITIONAL INFORMATION — S1701

↓

S1702

ARE CAMERA AND USER WITHIN PREDETERMINED DISTANCE?

NO →

YES ↓

**S1703**

CONTINUING USE

**S1704**

NOT CONTINUING USE

↓

END

# F I G. 18

START

S1801

HAS REFERENCE POSITION ALREADY BEEN OBTAINED?

YES

NO

OBTAIN REFERENCE POSITION — S1802

OBTAIN CURRENT POSITION — S1803

S1804

ARE REFERENCE POSITION AND CURRENT POSITION WITHIN PREDETERMINED DISTANCE?

NO

YES

S1805

CONTINUING USE

S1806

NOT CONTINUING USE

END

# F I G. 19

```
                    ┌──────────────┐
                    │    START     │
                    └──────┬───────┘
                           │
                           ▼
        ┌──────────────────────────────────┐
        │    OBTAIN CURRENT POSITION        │ ⌇ S1901
        └──────────────────┬───────────────┘
                           │
                           ▼
                        S1902
                      ◇◇◇◇◇◇◇◇◇◇◇
                   ◇◇             ◇◇
                ◇◇   ARE REFERENCE   ◇◇
              ◇  POSITION AND CURRENT  ◇    NO
             ◇    POSITION WITHIN       ◇─────────────┐
              ◇    PREDETERMINED       ◇              │
                ◇◇   DISTANCE?       ◇◇              │
                   ◇◇             ◇◇                 │
                      ◇◇◇◇◇◇◇◇◇◇◇                    │
                         │ YES                        │
                         │   S1903                    │   S1904
                         ▼                            ▼
        ┌──────────────────────────┐    ┌──────────────────────────┐
        │    CONTINUING USE         │    │    NOT CONTINUING USE     │
        └─────────────┬────────────┘    └─────────────┬────────────┘
                      │                                │
                      │◄───────────────────────────────┘
                      ▼
               ┌──────────────┐
               │     END      │
               └──────────────┘
```

44

# F I G. 20

```
                    ┌─────────────┐
                    │    START    │
                    └─────────────┘
                           │
                           ▼
                        ╱ S2001 ╲
                   ╱  HAS REFERENCE  ╲      YES
                  ◇  TIME ALREADY BEEN ◇──────────────┐
                   ╲    OBTAINED?    ╱                │
                        ╲       ╱                     │
                           │ NO                       │
                           ▼                          │
            ┌──────────────────────────┐              │
            │   OBTAIN REFERENCE TIME   │  S2002       │
            └──────────────────────────┘              │
                           │◄─────────────────────────┘
                           ▼
            ┌──────────────────────────┐
            │    OBTAIN CURRENT TIME    │  S2003
            └──────────────────────────┘
                           │
                           ▼
                        ╱ S2004 ╲
                   ╱      ARE       ╲
                  ╱  REFERENCE TIME   ╲     NO
                 ◇ AND CURRENT TIME WITHIN ◇──────────────┐
                  ╲ PREDETERMINED PERIOD  ╱               │
                   ╲     OF TIME?      ╱                   │
                        ╲         ╱                        │
                           │ YES      S2005           S2006│
                           ▼                               ▼
            ┌──────────────────────┐      ┌──────────────────────────┐
            │    CONTINUING USE    │      │    NOT CONTINUING USE     │
            └──────────────────────┘      └──────────────────────────┘
                           │                               │
                           ▼◄──────────────────────────────┘
                    ┌─────────────┐
                    │     END     │
                    └─────────────┘
```

45

# F I G. 21

START

OBTAIN CURRENT TIME — S2101

IS CURRENT TIME EARLIER THAN END TIME? — S2102

NO

YES S2103

CONTINUING USE

S2104

NOT CONTINUING USE

END

F I G. 22

```
                    START

                      │
                      ▼
                  ┌─S2201
        ╱ HAS REFERENCE ╲          YES
      ╱ POSITION ALREADY BEEN ╲ ──────────────┐
        ╲   OBTAINED?   ╱                       │
            ╲       ╱                           │
              │ NO                              │
              ▼                                 │
    ┌──────────────────────────┐                │
    │ OBTAIN REFERENCE POSITION │── S2202       │
    └──────────────────────────┘                │
              │ ◄──────────────────────────────┘
              ▼
    ┌──────────────────────────┐
    │   OBTAIN CURRENT POSITION │── S2203
    └──────────────────────────┘
              │
              ▼
                  ┌─S2204
        ╱  ARE REFERENCE  ╲
      ╱ POSITION AND CURRENT ╲       NO
     ╱   POSITION WITHIN      ╲ ──────────────────┐
      ╲    PREDETERMINED      ╱                    │
        ╲    DISTANCE?    ╱                        │
            ╲        ╱                             │
              │ YES                                │
              ▼                                     │
                  ┌─S2205                           │
        ╱  HAS REFERENCE  ╲         YES             │
      ╱ TIME ALREADY BEEN  ╲ ─────────────┐         │
        ╲    OBTAINED?    ╱                │         │
            ╲        ╱                     │         │
              │ NO                         │         │
              ▼                            │         │
    ┌──────────────────────────┐           │         │
    │   OBTAIN REFERENCE TIME   │── S2206   │         │
    └──────────────────────────┘           │         │
              │ ◄──────────────────────────┘         │
              ▼                                       │
    ┌──────────────────────────┐                      │
    │    OBTAIN CURRENT TIME    │── S2207              │
    └──────────────────────────┘                      │
              │                                        │
              ▼                                        │
                  ┌─S2208                              │
        ╱  ARE REFERENCE  ╲                            │
      ╱ TIME AND CURRENT TIME ╲      NO                │
     ╱   WITHIN PREDETERMINED  ╲ ───────────────────┐  │
      ╲    PERIOD OF TIME?    ╱                      │  │
            ╲        ╱                               ▼  ▼
              │ YES      S2209                   S2210
              ▼                                  ┌──────────────────────────┐
    ┌──────────────────────────┐                 │    NOT CONTINUING USE    │
    │      CONTINUING USE       │                 └──────────────────────────┘
    └──────────────────────────┘                      │
              │ ◄──────────────────────────────────────┘
              ▼
           END
```

# FIG. 23

```
┌─────────────────────────────┐
│    IMAGE CAPTURING UNIT      │～401
└─────────────────────────────┘
              │
┌─────────────────────────────┐
│    IDENTIFICATION UNIT       │～402
└─────────────────────────────┘
              │
┌─────────────────────────────┐
│      CALCULATION UNIT        │～2301
└─────────────────────────────┘
              │
┌─────────────────────────────┐
│      CONTINUOUS USE          │～403
│    DETERMINATION UNIT        │
└─────────────────────────────┘
              │
┌─────────────────────────────┐
│       RECORDING UNIT         │～404
└─────────────────────────────┘
```

FIG. 24

START

OBTAIN IMAGE — S2401

OBTAIN USER FEATURES — S2402

CALCULATE DEGREES OF SIMILARITY BETWEEN USER AND REGISTERED PERSON — S2403

S2404
IS THERE SIMILARITY WHICH IS HIGHER THAN PREDETERMINED THRESHOLD? — NO

YES — S2405
IDENTIFY CURRENT USER

S2406
ARE THERE IMAGES THAT HAS NOT BEEN IDENTIFIED PHOTOGRAPHER IN PAST? — NO

YES — S2407
CALCULATE DEGREES OF SIMILARITY BETWEEN CURRENT CAPTURED IMAGE AND PAST IMAGES THAT HAVE NOT BEEN ASSOCIATED WITH PHOTOGRAPHER INFORMATION

S2408
IS THERE SIMILARITY WHICH IS HIGHER THAN PREDETERMINED THRESHOLD? — NO

YES — S2409
DETERMINE THAT PAST USER AND CURRENT USER ARE IDENTICAL

S2411
IS THERE IMAGE FOR WHICH PHOTOGRAPHER HAS BEEN IDENTIFIED IN PAST? — NO

YES — S2212
CALCULATE DEGREES OF SIMILARITY BETWEEN CURRENT CAPTURED IMAGE AND PAST IMAGE HAVING BEEN ASSOCIATED WITH PHOTOGRAPHER INFORMATION

S2413
IS THERE SIMILARITY WHICH IS HIGHER THAN PREDETERMINED THRESHOLD? — NO

YES — S2414
DETERMINE THAT CURRENT USER AND PAST USER ARE IDENTICAL

ASSOCIATE PHOTOGRAPHER INFORMATION WITH IMAGES — S2410

STOP

F I G. 25A

ASSOCIATED WITH PHOTOGRAPHER INFORMATION

F I G. 25B

ASSOCIATE PHOTOGRAPHER INFORMATION
WITH IMAGE X THAT IS ASSOCIATED WITH
PHOTOGRAPHER INFORMATION

F I G. 25C

ASSOCIATED WITH PHOTOGRAPHER INFORMATION
(IMAGE DETERMINING)

# F I G. 26

```
┌─────────────────────────┐
│   IMAGE SELECTING UNIT   │〜2601
└─────────────────────────┘
            │
┌─────────────────────────┐
│     CALCULATION UNIT     │〜2301
└─────────────────────────┘
            │
┌─────────────────────────┐
│     CONTINUOUS USE       │
│   DETERMINATION UNIT     │〜403
└─────────────────────────┘
            │
┌─────────────────────────┐
│      RECORDING UNIT      │〜404
└─────────────────────────┘
```

# F I G. 27

START

S2701

IS THERE IMAGE
THAT HAS NOT BEEN ASSOCIATED WITH
PHOTOGRAPHER INFORMATION?

NO

YES

S2702

IS THERE IMAGE
THAT HAS BEEN ASSOCIATED WITH
PHOTOGRAPHER INFORMATION?

NO

YES

S2703 — SELECT IMAGES THAT HAVE NOT BEEN ASSOCIATED WITH
PHOTOGRAPHER INFORMATION

S2704 — SELECT IMAGES THAT HAVE BEEN ASSOCIATED WITH
PHOTOGRAPHER INFORMATION

S2705 — CALCULATE DEGREES OF SIMILARITY BETWEEN IMAGES THAT
HAVE NOT BEEN ASSOCIATED WITH PHOTOGRAPHER
INFORMATION AND IMAGES THAT HAVE BEEN ASSOCIATED WITH
PHOTOGRAPHER INFORMATION

S2706

IS THERE
SIMILARITY WHICH IS HIGHER THAN PREDETERMINED
THRESHOLD?

NO

YES

S2707 — DETERMINE THAT PHOTOGRAPHER IS IDENTICAL

S2708 — ASSOCIATE PHOTOGRAPHER INFORMATION WITH IMAGES

STOP

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018191194 A

- JP 3307936 B

**Non-patent literature cited in the description**

- **K. HE** ; **X. ZHANG** ; **S. REN** ; **J. SUN.** Identity mappings in deep residual networks.. *ECCV*, 2016
- **ALEXEY DOSOVITSKIY et al.** An image is worth 16x16 words: Transformers for image recognition at scale.. *ICLR*, 2021

- **J. DENG** ; **J. GUO** ; **N. XUE** ; **S. ZAFEIRIOU.** Arcface: Additive angular margin loss for deep face recognition.. *CVPR*, 2019
- C2PA Specifications. *Technical Specifications Version 1.2*, 03 November 2022, https://c2pa.org/specifications/specifications/1.2/specs/C2PA_Specification.html